# EUROPÄISCHE PATENTSCHRIFT

(11) **EP 0 901 540 B1**
(45) Veröffentlichungstag und Bekanntmachung des Hinweises auf die Patenterteilung: **24.09.2003**
(21) Anmeldenummer: 97927100.4
(22) Anmeldetag: 02.06.1997
(51) Int. Cl.: E02B 8/08

(54) **FISCHAUFSTIEGSANLAGE UND DEREN HERSTELLUNGSVERFAHREN**
FISH LADDER AND ITS CONSTRUCTION
ECHELLE A POISSONS

(30) Priorität: 01.06.1996 DE 19622096
(43) Veröffentlichungstag der Anmeldung: 17.03.1999
(73) Patentinhaber: Peters, Hans Wilhelm, 33014 Bad Driburg (DE)
(72) Erfinder: Peters, Hans Wilhelm, 33014 Bad Driburg (DE)
(74) Vertreter: Hanewinkel, Lorenz, Dipl.-Phys.
(86) Internationale Anmeldenummer: EP9702850
(87) Internationale Veröffentlichungsnummer: WO97046761

(56) Entgegenhaltungen:
- US-A- 1 730 005
- US-A- 3 962 876
- JENS: "Vertical-Slot-Rundbeckenfischpaß aus Stahlfertigteilen" WASSER UND BODEN, Bd. 47, Nr. 3, 1995, Seiten 55-59, XP002042709 in der Anmeldung erwähnt
- GEBLER: "Fischaufstiege, derzeitige Situation und zukünftige Konzeption" WASSERWIRTSCHAFT, Bd. 79, Nr. 2, Februar 1989, Seiten 64,66-68, XP002042710 in der Anmeldung erwähnt

## Beschreibung

Die Erfindung betrifft eine Fischaufstiegsanlage zur Überwindung einer Stauhöhe mit einem oberseitigen Wasser-Zulauf und einem unterseitigen Wasser-Ablauf und mit dazwischenliegenden, im wesentlichen in einer Gefällerichtung hintereinander angeordneten Becken, die jeweils einen Zuflußschlitz und einen Abflußschlitz als vertikale Durchflußschlitze und jeweils Umlenkmittel zur Bildung einer mäanderförmigen Passage aufweisen.

Fischaufstiegsanlagen, insbesondere Fischpässe und Fischtreppen, dienen Wandersalmoniden und Kleinbiozönosen zum Passieren von Querverbauungen, wodurch die Durchwanderbarkeit von Gewässern wiederhergestellt wird.

Aus der US-A-132 349 ist eine Fischaufstiegsanlage gemäß des Oberbegriffes bekannt, die aus auf einer geneigten Rampe festgelegten, im wesentlichen rechteckigen Becken mit innerhalb der Becken eingebrachten Umlenkwänden gebildet ist. Zur Gestaltung einer mäanderförmige Passage sind die Durchflußschlitze innerhalb der einzelnen Becken in gegenüberliegenden Umlenkwänden sowie den die einzelnen Becken abteilenden Querwänden abwechselnd angeordnet. Nachteilig ist, daß die Beckenwände im Bereich der Durchflußschlitze scharfkantig ausgebildet sind und daher an diesen Stellen der Strömungsfaden abreißt, wodurch aufsteigende Fische aufgrund der Wirbelströmungen bzw. Nebenströmungen sowie einer sich u.U. ändernden Drehrichtung der Strömung in dem Bereich des Durchflußschlitzes desorientiert werden und zur Wasseroberfläche abgelenkt werden. Die Fische steigen nicht bodenorientiert auf und verlassen die für sie artenabhängig optimale Fließgeschwindigkeit des Strömungsprofiles.

Weiterhin bilden die Beckenecken Toträume, in welchen sich nachteilig Geschiebe ablagert, so daß Auflandungen entstehen, die einen hohen Wartungsaufwand der Anlage erfordern.

Da die Rampe eine nahezu glatte Oberfläche aufweist, stellt die in einem Fließgewässer angeordnete Querverbauung trotz der Fischaufstiegsanlage aufgrund einer zu hohen bodennahen Fließgeschwindigkeit für Kleinfische sowie Benthos-Organismen ein unüberwindbares Hindernis dar.

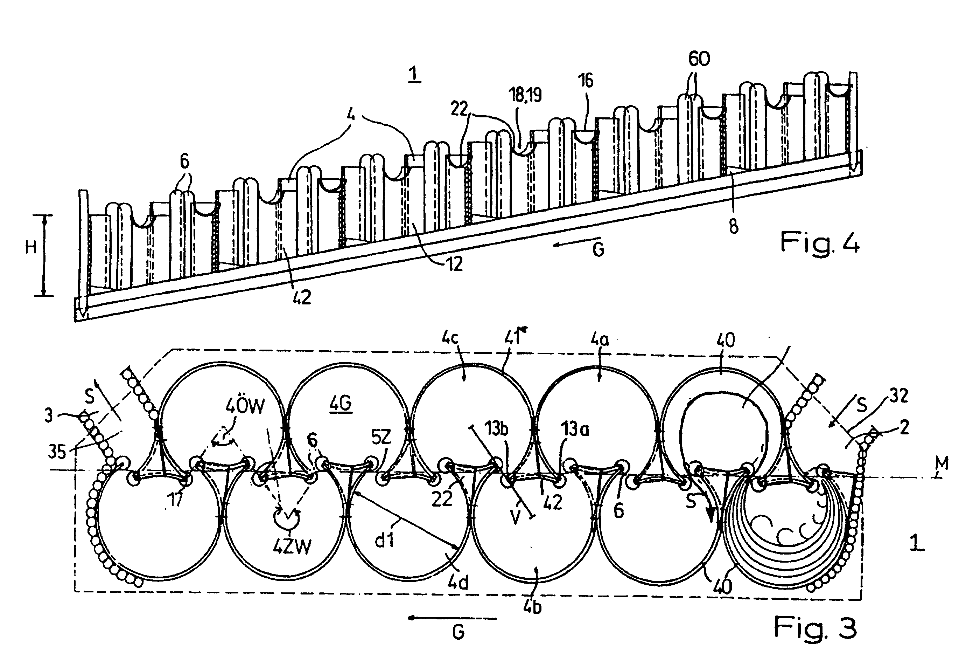

In einem Fachaufsatz ("Wasserwirtschaft 79 (1989)2, S.67") wird eine Fischaufstiegsanlage, der sog. Vertical-Slot-Pass, beschrieben, die aus in Durchflußrichtung hintereinander angeordneten, rechteckigen Becken besteht, deren Querwände vertikale Durchflußschlitze aufweisen. Die Durchflußschlitze sind alle zur selben Längsseite der Anlage benachbart, so daß sich ein sehr unregelmäßiges Strömungsbild ausbildet (siehe Fig. 4b, S.68). Sowohl im Ein- als auch im Auslaufbereich in bzw. aus den Becken sind für die Fische desorientierende, turbulente Nebenströmungen vorhanden.

Auch in dem Vertical-Slot-Pass sind innerhalb der Becken aufgrund ihrer Beckenform Toträume, wo sich Material ablagert, das nur mit Hilfe von aufwendigen, zeitintensiven Reinigungsarbeiten entfernt werden kann.

Der Vertical-Slot-Pass weist eine rauhe Gestaltung der Beckensohle auf, um die Fließgeschwindigkeit im sohlennahen Bereich abzusenken, damit auch Kleinfische aufsteigen können. Jedoch hat die Praxis gezeigt, daß lose Steine sich in Durchflußschlitzen festsetzten und den Durchgang versperren, folglich die Lebewesen im Aufsteigen behindert werden.

Der Vertical-Slot-Pass ist zwar gegenüber den herkömmlichen Fischaufstiegsanlagen, wie Rhomboidpässen od. dgl., hinsichtlich der Durchwanderbarkeit für Wandersalmoniden und Benthos-Organismen verbessert, jedoch unter strömungstechnischen Gesichtspunkten nicht optimal, weil eine eckige Beckenform neben der Ausbildung von Toträumen auch die Entstehung von turbulenten Nebenströmungen begünstigt, was durch scharfe Kanten im Bereich der Durchflußschlitze verstärkt wird.

Weiterhin sind aus einem Fachaufsatz ("Wasser & Boden 47, (1995)3, S.55 ff") verschiedene Fischaufstiegsanlagen mit Rundbecken (die sog. Rundbecken-Pässe) bekannt, welche entweder in Gefälle-Richtung abwechselnd paarweise angeordnete Kronenund Bodenausschnitte oder Durchflußschlitze aufweisen. Diese Öffnungen haben scharfe Kanten, so daß bereits oben angeführte Nachteile, wie u.a. eine Ablösung des Strömungsfadens sowie Ausbildung von Wirbelströmungen, auftreten. Die Strömung verläuft nicht parallel zum Beckenboden, sondern ist nach oben gerichtet, so daß die aufsteigenden Fische die Information erhalten, zur Wasseroberfläche zu schwimmen und nicht bodenorientiert aufzusteigen.

Durch die wechselseitige Ausrichtung der Öffnungen in Richtung des Gefälles bildet sich in den nacheinander durchströmten Becken eine wellenförmige Hauptströmung aus, die kontinuierlich in Richtung des Gefälles verläuft und daher sehr schnell fließt, so daß die kritischen Fließgeschwindigkeiten für Kleinfisch teilweise überschritten werden. Um diesem Problem abzuhelfen, wird das Gefälle etwa auf 10 % verringert, was jedoch mit einer nachteiligen Erhöhung der Anzahl der Becken verbunden ist.

In Fällen, in denen die Becken einen Durchflußschlitz haben, müssen die das Becken ergebenden Stahlelemente im Bereich des Durchflußschlitzes durch eingeschweißte Querstreben stabilisiert werden. Dies hat den Nachteil, daß die Strömung geteilt und sich desorientierende Wirbel ausbilden.

Die Montage eines Rundbecken-Passes muß daher zeitaufwendig sowie kostenintensiv vor Ort durchgeführt werden.

Allgemein sind Fischaufstiegsanlagen bekannt, deren rechteckige Becken Kronenausschnitte und Schlupflöcher aufweisen. Die Praxis hat gezeigt, daß viele dieser Anlagen nicht funktionstüchtig sind. Die Ursache hierfür liegt in Konstruktionsfehlern sowie ihrer aufwendigen Wartung. Weiterhin ist nachteilig, daß derartige Anlagen nur die Wanderung einzelner Fischarten gestatten, da an den Schlupflöchern Maximalgeschwindigkeiten für die jeweilige Fischart überschritten werden. Kleintieren ist die Durchwanderung derartiger Fischpässe nicht möglich. Die Beckenpässe mit Schlupfloch und Kronenausschnitt erfordern einen hohen Wartungsaufwand, da sich die Schlupflöcher und Kronenausschnitte mit Treibgut zusetzen oder auch die Becken verschlammen, was im schlimmsten Fall zu einer Unpassierbarkeit führen kann. Die natürliche Reinigungswirkung in solchen Anlagen ist stark abhängig von den Strömungsverhältnissen bzw. der Wassermenge. Die Funktionsfähigkeit der Fischaufstiegsanlage ist bei Niedrigwasser nicht gewährleistet, da diese Anlagen einen hohen Wasserbedarf erfordern.

Weiterhin wird das Problem der Durchgängigkeit von Fließgewässern dadurch gelöst, daß ein künstlicher Umleitungsbach unter Nachbildung eines natürlichen Baches die Querverbauungen umgeht. Diese Lösung erfordert einen hohen Platz- und Wasserbedarf. Auch müssen landschaftsgestalterische Begleitmaßnahmen nach der Bauphase durchgeführt werden, was sich kostenintensiv auswirkt.

Ausgehend von dem Stand der Technik, ist es Aufgabe der Erfindung, eine Fischaufstiegsanlage der eingangs genannten Art zu verbessern, daß dieselbe eine kompakte, kostengünstige, nahezu wartungsfreie Passage zur sicheren, einfachen Überwindung einer durch eine Querverbauung hervorgerufenen Stauhöhe für Wandersalmoniden sowie Benthos-Organismen, unabhängig von ihrer Art, bereitstellt.

Ferner besteht eine herstellungstechnische Aufgabe der Erfindung darin, ein Verfahren zur Herstellung von teilzylindrischen Becken in einer Fischaufstiegsanlage zu offenbaren, welches durch niedrige Kosten, geringen Fertigungsaufwand und eine nahezu abfallfreie Fertigung gekennzeichnet ist.

Die gegenständliche Aufgabe wird erfindungsgemäß durch die Merkmale des Patentanspruches 1 gelöst. In den Unteransprüchen 2 bis 23 sind weitere vorteilhafte Gestaltungen der erfindungsgemäßen Fischaufstiegsanlage angegeben.

Zur Bildung einer mäanderförmigen Passage sind in der erfindungsgemäßen Fischaufstiegsanlage teilzylinderische Becken in Richtung des Gefälles, also des Gradienten, hintereinander angeordnet, wobei aufeinander folgende Becken horizontal und vertikal zueinander versetzt sind. Jedes zweite Becken hat dieselbe Ausrichtung, so daß alle Öffnungen der Becken in Richtung einer in Längsrichtung der Fischaufstiegsanlage verlaufenden Mittellinie weisen. Beim Durchfließen der hintereinander angeordneten Becken wechselt die Strömung jedes Mal ihre Drehrichtung, wobei gleich ausgerichtete Becken die selbe Drehrichtung haben.

Ein einzelnes Becken besteht aus zwei gegenüberliegenden durch vertikale Durchflußschlitze voneinander getrennten Beckenwänden, wobei ein oberer Durchflußschlitz einen Zuflußschlitz in das Becken und ein unterer Durchflußschlitz einen Abflußschlitz aus dem Becken darstellt. Der überwiegende Teil der Beckeninnenwand wird von einer ersten Beckenwand aus einem teilzylindrischen Rohrstück mit einem Zentriwinkel von 180 bis 350° und somit einem Öffnungssektor mit einem Öffnungswinkel von 180 bis 10° gebildet. Das gegenüberliegende, eine zweite Beckenwand bildende Teilstück ist kürzer als der Becken-Durchmesser und ist innerhalb des Öffnungssektor oder im dem sich ergebenden Hohlraum der ersten Beckenwand angeordnet. Gleichzeitig stellt dieses Teilstück auch ein Verbindungsstück von benachbarten Kanten der unmittelbar ober- und unterhalb angeordneten Becken mit entgegengesetzter Ausrichtung dar.

Die Mittelpunkte der Becken mit gleicher Ausrichtung liegen jeweils auf einer imaginären, in Richtung des Gefälles verlaufenden Gerade. Vorzugsweise weisen die Becken eine gleich große Grundfläche auf, so daß die Mittelpunkte von benachbarten Becken zueinander gleichmäßig beabstandet sind. Um eine in einer Knicklinie verlaufende Fischaufstiegsanlage herzustellen, werden vorzugsweise unterschiedliche Beckengröße mit verschiedenen Durchmessern eingebaut.

Die Durchflußschlitze erstrecken sich jeweils quer zur Gefälle-Richtung. Die Lage der Durchflußschlitze ist abhängig von der Grundfläche der Becken, so liegen die Durchflußschlitze, beispielsweise in halbzylindrischen Becken rechtwinklig zum Gefälle oder in Becken mit einem Öffnungswinkel kleiner als 180° stumpfwinklig zum Gefälle. So bildet sich vorteilhaft eine mäanderförmige Passage aus, die in einem Ein- bzw. Auslaufbereich aus den Becken entgegen dem Gefälle ansteigt, dann verläuft die Strömung entlang der Beckeninnenwand, worin ein Selbstreinungseffekt der Becken durch dieselbe begründet ist. Das hat den Vorteil, daß die erfindungsgemäße Fischaufstiegsanlage nicht verlandet und der Reinigung- sowie Wartungsaufwand relativ gering ist. Auch existieren keine Toträume, so daß die natürlichen Reinigungswirkung der Strömung unterstützt wird. Da keine Ablagerungen in den Becken und keine Wirbelzonen auftreten, werden die Fische beim Aufsteigen nicht desorientiert.

Die teilzylindrische Beckenform und die Anordnung der Durchflußschlitze bewirken weiterhin, daß die Strömung tangential in das nächste Becken eingeleitet wird. Es bildet sich eine laminare Hauptströmung als eine Lockströmung für die aufstiegswilligen Lebewesen aus, so daß diese auf einfache und sichere Weise die Stauhöhe überwinden können. Ferner kommt es auch nicht zu einem Abriß der Strömung im Bereich der Durchflußschlitze und die Strömung löst sich auch nicht von der Beckeninnenwand ab, insgesamt ergibt sich ein turbulenzarmes Strömungsbild. Die Gestaltung der Becken ist somit physiologisch optimal an die natürlichen Lebensgewohnheiten der Fische angepaßt, da in der Fischaufstiegsanlage keine verwirrenden Wirbelströmung vorherrschen, sondern der aufstiegswillige Fisch durch die laminare Strömung eine eindeutige Information erhält.

Durch die Gestalt der erfindungsgemäßen Fischaufstiegsanlage mit teilzylindrischen Becken und quer zum Gefälle orientierten Durchflußschlitzen in Form einer mäanderförmigen Passage sinkt die Fließgeschwindigkeit der Strömung innerhalb eines Beckens von der Beckeninnenwand bis in das Beckenzentrum auf nahezu Null. Das hat den Vorteil, daß sich der Nähe des Beckenmittelpunktes eine Ruhezone ausbildet, in welcher die Fische und Kleintiere während ihres Aufstieges verharren können. So können alle aufstiegswilligen Benthos-Organismen und Wandersalmoniden in dem für sie optimalen Strömungsbereich aufsteigen. Verglichen zu dem Strömungsverlauf in den bekannten Anlagen ist die in der erfindungsgemäßen Fischaufstiegsanlage ausgebildete mäanderförmige Strömung durch ein laminares Profil gekennzeichnet.

Die Breite der Durchflußschlitze beträgt mindestens 30 mm, vorzugsweise mindestens 45 mm, wodurch ein bodennaher Aufstieg von Kleinfischen als auch Großsalmoniden in der Fischaufstiegsanlage sicher und unabhängig von einem Wasserstand in den Becken gewährleistet ist. Weiterhin sind die Durchflußschlitze durch ein strömungssteuerndes Umlenkmittel über die gesamte Höhe der Becken begrenzt. Ein erstes, strömungssteuerndes Umlenkmittel ist ein vertikales teilzylindrisches Rohr mit relativ zum Radius der Beckeninnenwände wesentlich kleineren Radius.

Neben einer Abnahme der Fließgeschwindigkeit zum Beckenmittelpunkt nimmt diese auch mit zunehmender Beckenhöhe ab, was eine Wanderung der Fische in Etagen durch die Fischaufstiegsanlage erlaubt.

In einer bevorzugten Ausführungsform der erfindungsgemäßen Fischaufstiegsanlage ist über das erste teilzylindrische Rohr mindestens ein zweites, kürzeres teilzylindrisches Rohr festgelegt, wodurch sich eine Querschnittsänderung über der Höhe des Durchflußschlitzes ergibt. Dieses zweite Rohr hat einen etwas größeren Innendurchmesser als der Außendurchmesser des unmittelbar darunter angeordneten Rohres.

Diese die Kanten zwischen hintereinander angeordneten Beckenwänden abrundenden Rohre sind Umlenkmittel, vorzugsweise sind zwei weitere teilzylindrische Rohre mit verschiedener Länge als Umlenkmittel über das erste Rohr geschoben, wobei das unterste Rohr den größten Durchmesser und die kürzeste Länge aufweist, so daß der Querschnitt des Durchflußschlitzes von der Wasseroberfläche zum Beckenboden abnimmt. Der Querschnitt weist dann drei Stufen auf, daher ist die Fließgeschwindigkeit der Strömung, abgesehen von einem bodennahen Bereich innerhalb des Durchflußschlitzes, nahezu konstant, wobei das vertikale Strömungsbild mehrere Korridore hat. In den Korridoren ist die Strömung jeweils konzentriert, es kommt zu einem Tunneleffekt, so daß der Fisch in dem Bereich der für ihn optimalen Fließgeschwindigkeit aufsteigt. Die maximalen Fließgeschwindigkeiten für die Fischarten werden nicht überschritten.

Vorteilhaft ist die Festlegung einer Gegen-Berme im Auslaufbereich aus den Becken, insbesondere in Becken deren Grundfläche größer als eine Halbkreisfläche ist. Diese Gegen-Berme steigt vorzugsweise mit dem gleichen Wert an wie das Gefälle fällt. Hierdurch wird ortsunabhängig in den Becken eine parallele Strömung zum Beckenboden gezielt. Das hat den Vorteil, daß bodenorientierte Fisch nicht durch eine Ablösung der Strömng von dem Boden in Richtung der Wasseroberfläche fehlgeleitet werden.

Besonders vorteilhaft ist es, wenn die Becken zur Bildung eines Lückensystems einen rauhstrukturierten Beckenboden aufweisen, so daß auch Benthos-Organismen bodennah aufsteigen. Bei einer bevorzugten Ausführungsform ist eine amorphe, weitmaschige Matte mit untereinander verbundenen Hohlräumen mit Hilfe von Zement in den Beckenboden eingeklebt. Die Verwendung einer Matte hat zum einen fertigungstechnische Vorteile und zum anderen tritt das Problem von Durchflußversperrung vor den Durchflußschlitzen abgelagerten Steinen, Geschiebe, Treibholz oder dgl. nicht auf. Daher ist der Wartungsaufwand gering, was sich positiv in niedrigen Betriebskosten wiederspiegelt. Alternativ werden zur Gestaltung der Beckensohle Sedimente verwendet.

Ein rauher Beckenboden bewirkt eine Absenkung der Fließgeschwindigkeit im bodennahen Bereich, so daß auch Kleinfische aufsteigen können. Das Lückensystem mit seinen Hohlräumen, Ritzen und Spalten bietet auch Kleintieren die Möglichkeit, die durch die Querverbauung hervorgerufene Stauhöhe zu überwinden.

Bei einer ersten Ausführungsform haben die Becken eine Halbkreisfläche als Grundfläche, dann hat das Rohrstück einen Zentriwinkel von 180° und das gegenüberliegende, die zweite Beckenwand bildende Teilstück ist auf dem Durchmesser des Halbkreises angeordnet. Als Teilstücke dienen vorzugsweise Platten, deren längsseitige Abmessungen kleiner als der Durchmesser des halbzylindirschen Rohrstück ist. Die aus diesen Halbzylinder-Becken gefertigte Ausführungsform der Fischaufstiegsanlage ist besonders kostengünstig und die Einzelteile zur Zusammensetzung der Fischaufstiegsanlage sind bereits vormontierbar.

Bei einer zweiten Ausführungsform ist die Grundfläche der Becken größer als die Halbkreisfläche. Die Beckenwände bestehen aus einem Rohrstück mit vorzugsweise einem Zentriwinkel von 300°, so daß die Öffnung zwischen den Kanten dieser ersten Beckenwand einen Öffnungswinkel von 60° aufweist. Die gegenüberliegende zweite Beckenwand wird von einem anderen Rohrstück gebildet, welches paßgenau zwischen die benachbarten Kanten des unmittelbar ober- und unterhalb angeordneten Beckenwand eingelegt ist, und folglich stellt die zweite Beckenwand ein Verbindungsstück zwischen den ersten Beckenwänden gleicher Ausrichtung dar. Vorzugsweise ist zur Bildung eines einzigen Beckens die zweite Beckenwand auf einer den Kreisbogen der ersten Beckenwand bildenden Sehne angeordnet, so daß der Flächeninhalt des eine Grundfläche des Beckens bildenden Kreissegmentes größer als eine Halbkreisfläche ist. Die aus diesen Zylindersegment-Becken gefertigte Ausführungsform der Fischaufstiegsanlage bildet eine strömungstechnisch optimale, mäanderförmige Passage. Die Strömung ist turbulenzarm. Auch hat diese Beckenform den Vorteil, daß bei der Herstellung der Becken kein Verschnitt anfällt. Die Einzelteile sind ebenfalls zur Zusammensetzung der Fischaufstiegsanlage vormontierbar.

Die erfindungsgemäße Fischaufstiegsanlage zeichnet sich durch einen gegenüber den herkömmlichen Fischaufstiegsanlagen vergleichsweise geringen Wasserbedarf aus, und auch bei großen Wasserspiegelschwankungen im Oberlauf des Fließgewässers stellen sich gleichbleibend gute Strömungsverhältnisse ein.

Fische müssen durch eine Lockströmung in die Fischaufstiegsanlagen und durch dieselbe geleitet werden. Eine optimale Lockströmung wird durch die spitzwinklige Anordnung des unteren Ablaufes aus der Fischaufstiegsanlage in das Fließgewässer erreicht. Eine Konzentration der Lockströmung kann durch ein quer zur Gewässerströmung liegendes, zwischen den das Fließgewässer seitlich begrenzenden Ufern verlaufendes Leit- und Strömungsorgan, welches zur Führung von ablaufendem Wasser über die Querverbauung zum unteren Ablaufgraben der Fischaufstiegsanlage erzielt werden.

Als Leit- und Umlenkorgan wird vorzugsweise eine am Fußpunkt der Querverbauung angeordnete Bohle mit an das Gewässer angepaßten Abmessungen, vorzugsweise 6 x 12 cm Querschnittsfläche, aus Lärchenholz eingesetzt. Dieses Leitund Umlenkorgan am Fußpunkt des Wehrschützes dient dazu, das Restwasser der teilweise undichten Wehrschotten zusätzlich in das unterste Becken der Aufstiegsanlage zu führen, um hier am Eingang die Lockströmung zu konzentrieren und um "Nebenlockströme" zu vermeiden.

Zusätzlich könnte - je nach individueller Situation - ein Fischleitrechen, welcher quer zur ablaufenden Flächenströmung, z.B. hinter einer Turbinenanlage, von Ufer zu Ufer senkrecht bis in die Sedimente geführt wird, vorteilhaft sein.

Die erfindungsgemäße Fischaufstiegsanlage ist als eine Baueinheit über seitliche gesicherte Anbindungsgräben an das Fließgewässer angeschlossen, wobei ein oberer Anbindungsgraben zum oberen Staubereich oberhalb der Querverbauung, und ein unterer Verbindungsgraben zum unteren Abflußbereich unterhalb der Querverbindung führt. Vorzugsweise hat der obere Anbindungsgraben am Eingang eine stabile Klappe aus einer Faserzementplatte, welche bis auf die Sedimente des Staubereiches führt. Die Klappe ist gegen die Fließrichtung des Stauwassers geöffnet. Durch diese Anordnung finden die rückwandernden Aale den Fischpaß und können ungehindert in Richtung Meer (Laichgebiet Sargassosee) abwandern. Insofern eignet sich diese Erfindung insbesondere hervorragend als sogenannte Aalgleite.

Weiterhin wirkt sich die einfache Konstruktion der Fischaufstiegsanlage kostengünstig aus. Besonders kostengünstig ist eine Fertigteilmontage, bei der die Becken mit eingeklebten Bodenplatten und einzementierten Matten auf einem vorgefertigten Stahlgerüst, vorzugsweise feuerverzinkt, vormontiert sind. Ein vorgefertigtes Einzelteil wird durch mehrere nebeneinander liegende Rohrstücken gleicher Ausrichtung mit dazwischen liegenden kürzeren Teilstücken gebildet. Die Anzahl der auf dem Fertigteil vormontierten Becken ist abhängig von der Gesamtzahl der Becken in der Fischaufstiegsanlage, vorzugsweise sind jedoch drei bis vier Becken der gleichen Ausrichtung hintereinander angeordnet, so daß ein einfacher Transport und eine einfache Endmontage vor Ort durchführbar sind. Hier kommt weiterhin positiv die kreissegmentförmige Grundform der Becken zum Tragen, da für den Transport die Fertigteile ineinander geschoben werden können.

Bei der Montage vor Ort werden ,je nach individuellem Erfordernis, entweder die vormontierte Version, bestehend aus vorgefertigten Einzelteilen, auf ein Stahlleitergerüst montiert im Verlauf des vorgegebenen Gefälles mit vorbetonierten Einzelfundamenten fixiert und an den Staubereich und das Unterwassser, wie beschrieben, angeschlossen, oder die Becken auf eine örtlich erstellte Betonschrägplatte (Rampe) montiert und mit Spezialzement abgedichtet. Alle Anschlußsstellen, wie Zwischenräume, werden mit Schmelzzement ausgegossen. Von außen werden die Fertigteile mit einem schrägen Zementfluß versehen, um sie gegen Verrutschen zu sichern. Durch Verwendung eines Spezialzements wird hierbei eine zusätzliche Abdichtung erreicht. Die Becken untereinander werden mit Bolzen aus Edelstahl und Neopren-Scheibendichtungen miteinander verbunden. Aufgeschobene, den Durchflußschlitz bildende Umlenkmittel an den Beckenwand-Kanten sind aus Faserzement-Rohren vorgefertigt.

Sie werden an den Beckenenden der Beckenwände mittels Edelstahlschrauben gesichert und mit Schmelzzementmörtel ausgegossen. Außerdem werden die Kopfenden abgerundet.

Das Gefälle bzw. die Steigung der Fischaufstiegsanlage wird durch den Höhenversatz der Becken von max. 25 cm und dem individuellen Beckendurchmesser bestimmt. Dabei sollte das Kletter- bzw. Schwimmvermögen der wanderwilligen Individuen durch den Teilmäander (erste Ausführungsform) oder Vollmäander (zweite Ausführungsform) der Becken berücksichtigt werden.

Abschließend kann zusammengefaßt werden, daß mit der erfindungsgemäßen Fischaufstiegsanlage die strömungstechnischen Forderungen hinsichtlich der Vermeidung von Turbulenzen und der Ausbildung einer Lockströmung durch eine örtliche Konzentration der Wassermenge in den Ablaufbereichen sehr gut erfüllt werden.

Weiterhin zeichnet sich die erfindungsgemäße Anlage durch eine besonders einfache Konstruktion, sowie die Möglichkeit einer Fertigteilmontage, aus.

Die fertigungstechnische Aufgabe wird erfindungsgemäß durch die Merkmale des Patentanspruches 33 gelöst, in den Unteransprüchen 34 bis 42 sind weitere vorteilhafte Varianten des erfindungsgemäßen Herstellungsverfahrens dargestellt.

Ein Rohr, insbesondere handelsübliche Rohre aus Zement, Glasfaserzement oder anderen verwendeten Materialien, wird durch abwechselnd rechtwinklig zur Rohrachse verlaufende Querschnitte und unter einem durch ein Gefälle in der Fischaufstiegsanlage vorgegebenen Schnittwinkel zur Rohrachse verlaufende Querschnitte in mehrere gleiche Rohrstücke zerteilt. Aus jedem dieser Rohrstücke wird durch zur Rohrachse parallel verlaufende Koaxialschnitte mindestens ein Rohrsektor herausgeschnitten, und so eine teilzylindrische Beckenwand mit einem von dem Beckentyp abhängigen Öffnungswinkel von 180 bis 20° hergestellt.

Bei Beckentypen aus Halbzylindern ist der herausgeschnittene Rohrsektor ebenfalls ein Halbzylinder, vorteilhaft entsteht kein Abfall. Bei der Fertigung kleinerer Rohrsektoren mit einem Zentriwinkel kleiner 180° werden auch nicht als Verschnitt verworfen, sondern als ein eine zweite, kürzere Beckenwand bildendes Teilstück zwischen in Gefällerichtung benachbarten hintereinander angeordneten Becken gleicher Ausrichtung verwendet. Es kann u.U. nötig sein, die Größe des Teilstücks durch einen weiteren parallel zur Längsachse verlaufenden Koaxialschnitt zu verringern.

Mit dem erfindungsgemäßen Verfahren sind die Einzelteile der Fischaufstiegsanlage ortsunabhängig vormontierbar, so daß die Installation vor Ort einfach und schnell durchgeführt werden kann. Hierdurch fallen die Investitionskosten gering aus.

Anhand der Fig. 1 bis 15 wird die erfindungsgemäße Fischaufstiegsanlage näher erläutert, wobei in den Fig. 1 bis 4 sowie 8 bis 10 verschiedene bevorzugte Ausführungsformen der Fischaufstiegsanlage dargestellt sind. Die Fig. 5 bis 7 zeigen eine Anbindung der Fischaufstiegsanlage in ein durch ein Wehr aufgestautes Fließgewässer. Das erfindungsgemäße Herstellungsverfahren wird anhand der Schnittpläne gem. Fig. 16 bis 19 genauer beschrieben. Es zeigt:

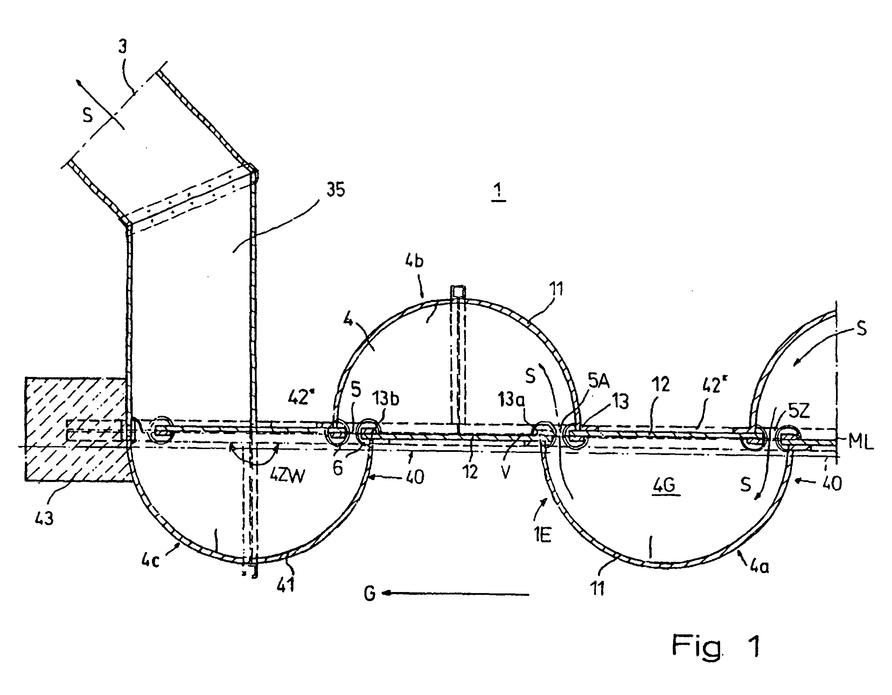

- Fig. 1: eine Draufsicht auf einen Wasser-Ablauf aus einer Fischaufstiegsanlage mit halbzylindrischen Becken (erste Ausführungsform),

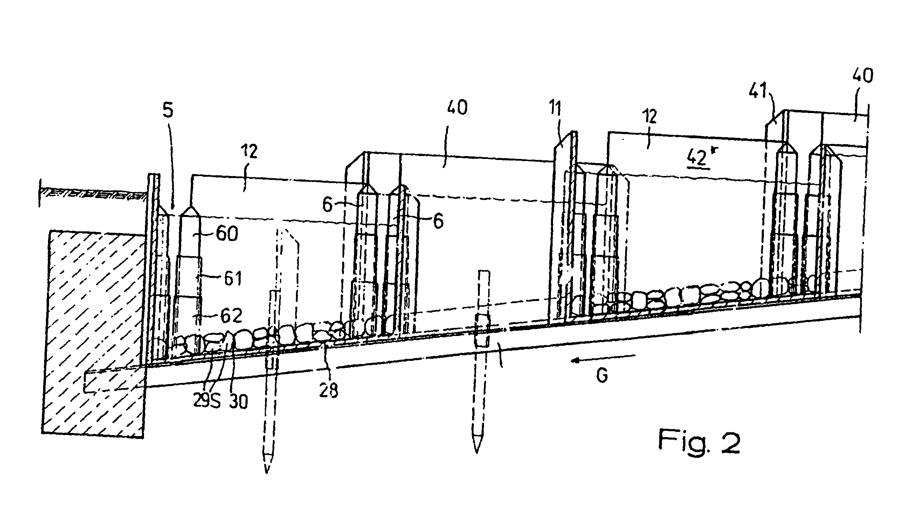

- Fig. 2: einen Längsschnitt durch die Fischaufstiegsanlage gem. Fig. 1,
- Fig. 3: eine Draufsicht auf eine Fischaufstiegsanlage mit nahezu zylindrischen Becken mit einer Öffnung (zweite Ausführungsform),
- Fig. 4: einen Längsschnitt durch die Fischaufstiegsanlage gem. Fig. 4,

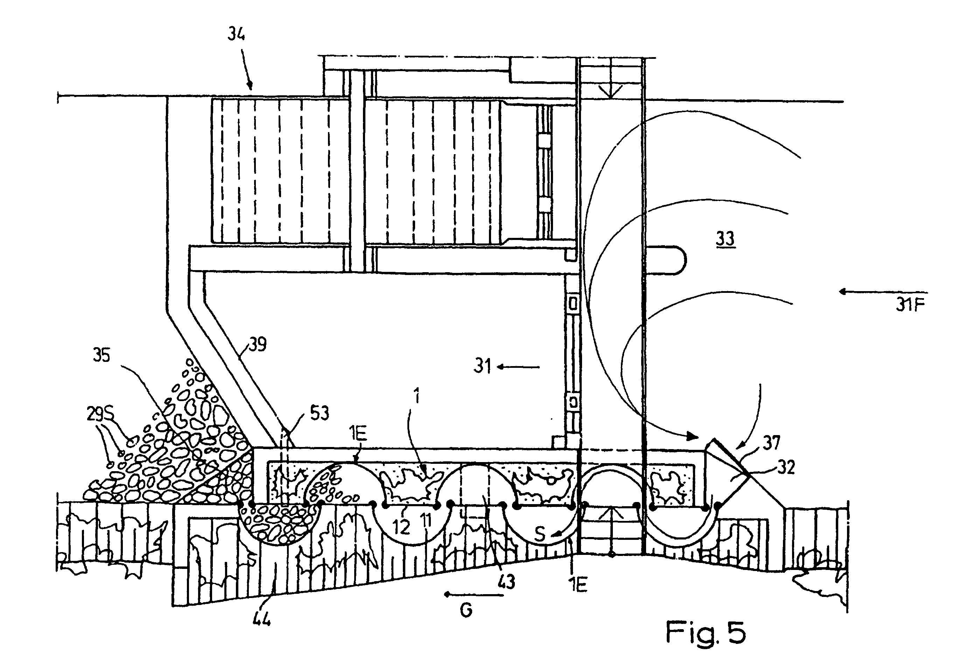

- Fig. 5: eine schemastische Draufsicht auf eine in ein Fließgewässer integrierte Fischaufstiegsanlage gem. Fig. 1 als einem Bypass um eine Querverbauung,

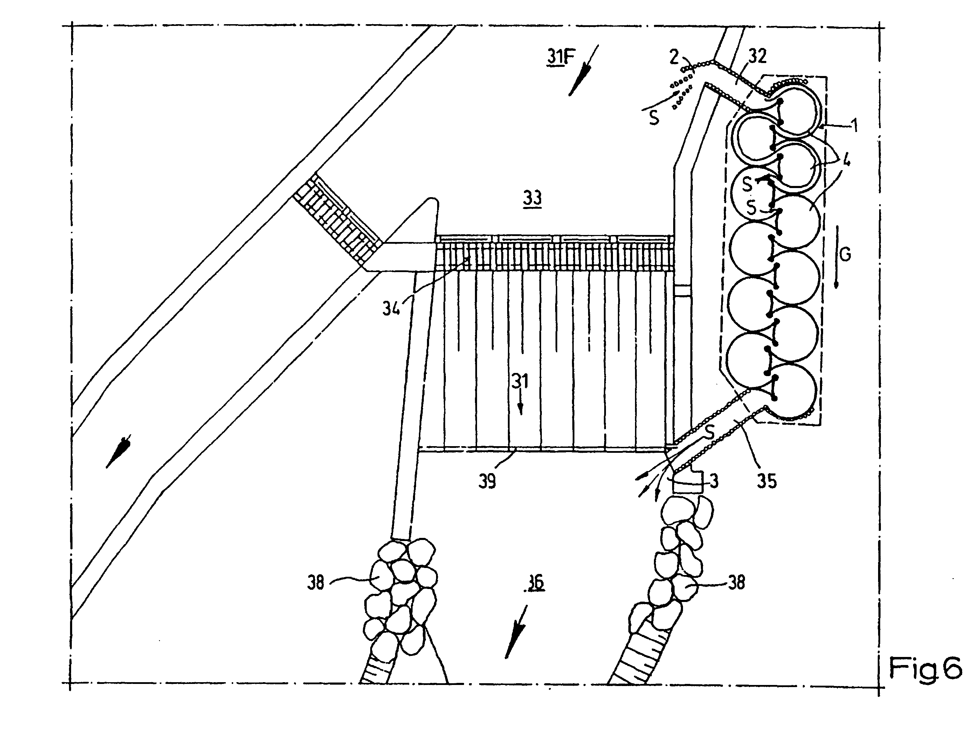

- Fig. 6: eine schematische Draufsicht auf eine in ein Fließgewässer integrierte Fischaufstiegsanlage gem. Fig. 3 als einem Bypass um ein Schottenwehr,

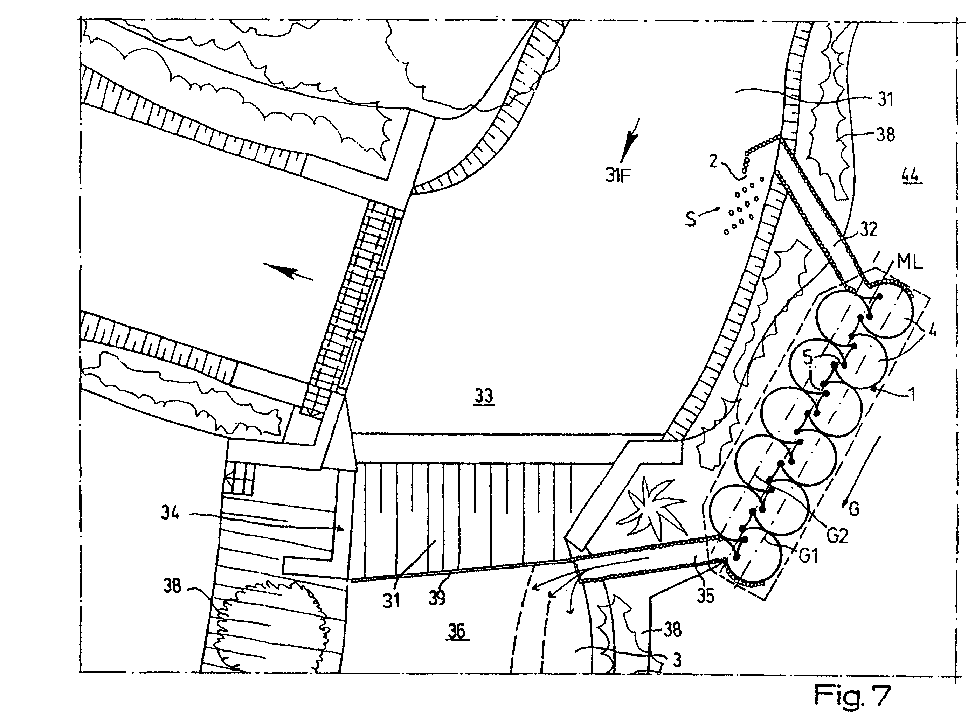

- Fig. 7: eine schematische Draufsicht auf eine in ein Fließgewässer integrierte Fischaufstiegsanlage gem. Fig. 3 als einem Bypass um ein Streichwehr,

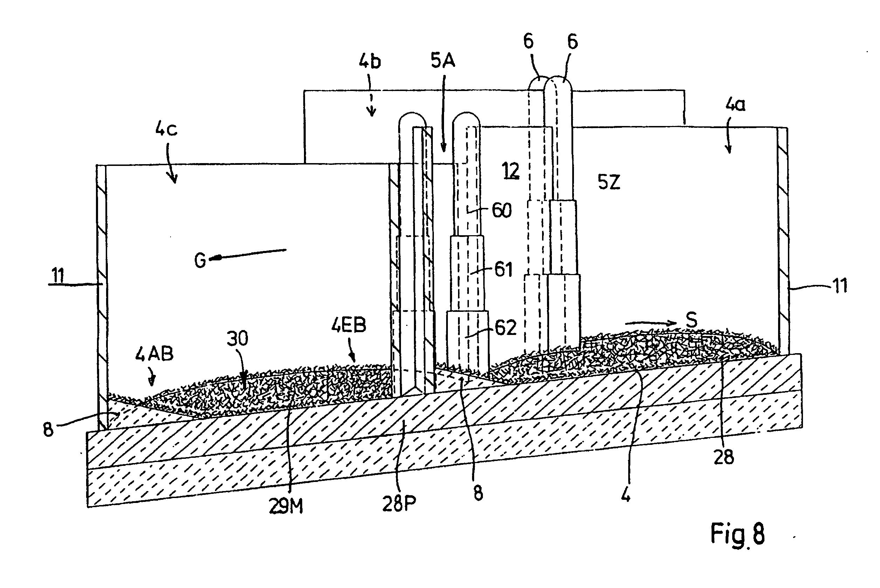

- Fig. 8: einen Längsschnitt durch ein Becken mit Gegen-Berme und bodenseitiger Matte,

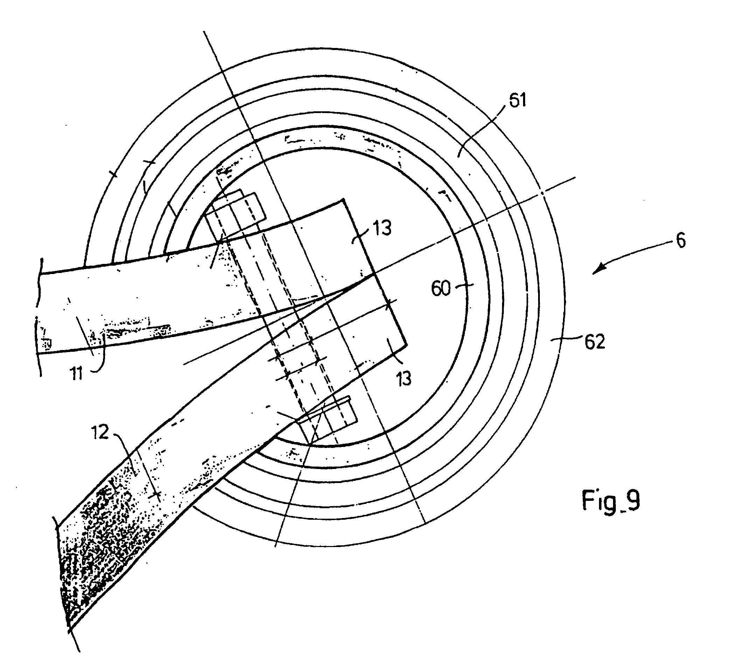

- Fig. 9: eine detaillierte Draufsicht auf eine Verbindung zweier in Längsrichtung hintereinander angeordneter Beckenwände und einem die zusammenstoßenden Kanten umgebendem Umlenkmittel,

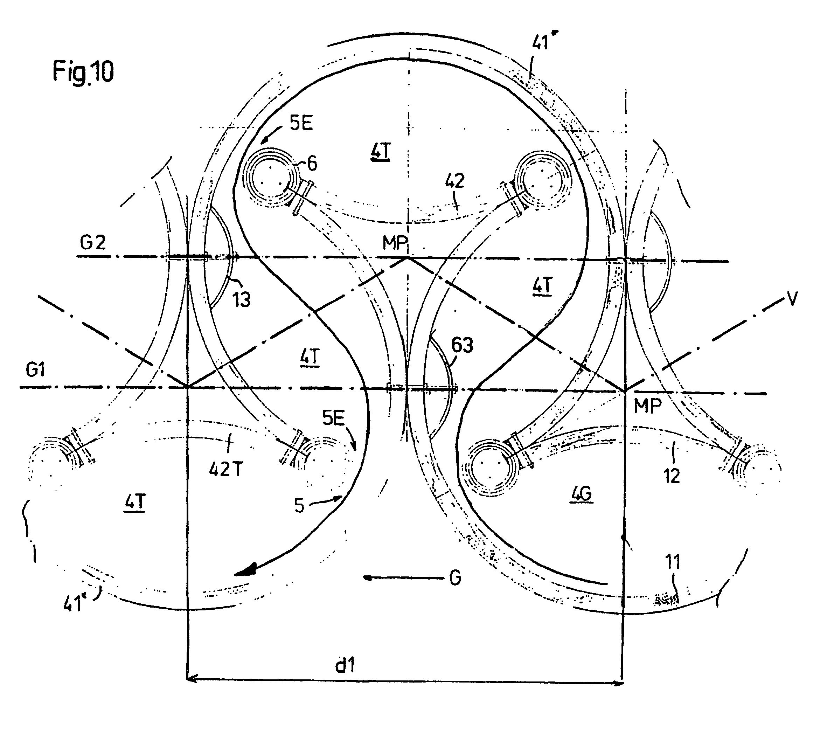

- Fig. 10: eine detaillierte Draufsicht auf einen Teilabschnitt einer Fischaufstiegsanlage mit drei im Querschnitt nahezu gleich großen, elliptischen Teilbecken (pro Becken) (dritte Ausführungsform),

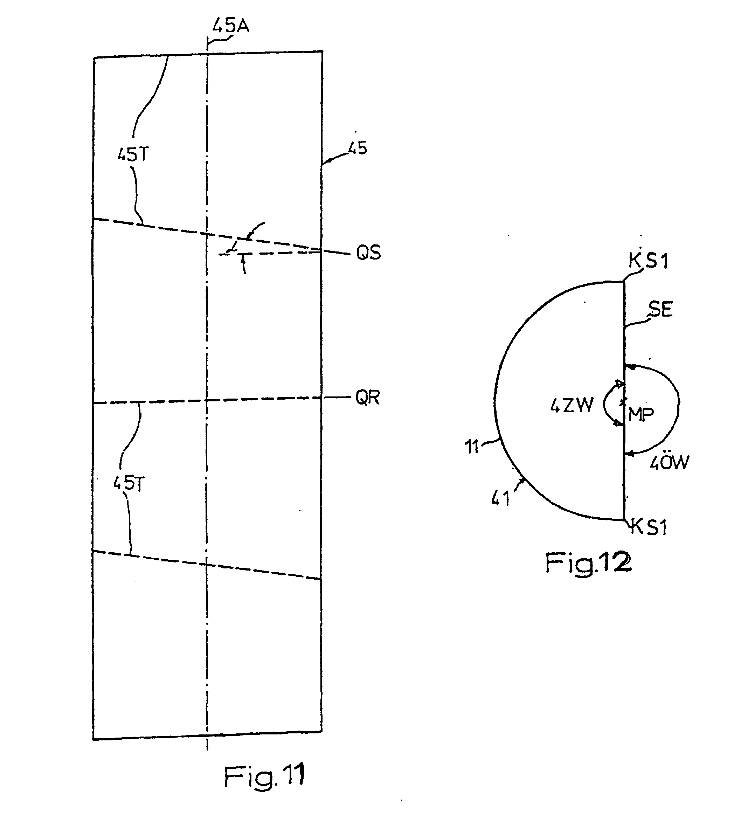

- Fig. 11: Schnittplan für ein Herstellungsverfahren von halbzylindrischen Becken für eine Fischaufstiegsanlage,
- Fig. 12: eine Draufsicht auf ein halbzylindrisches Becken,

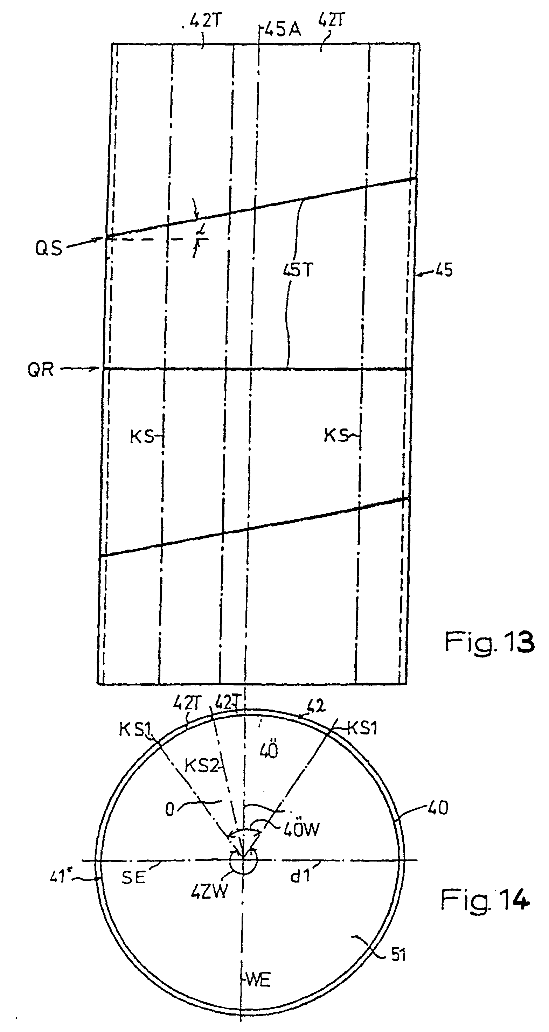

- Fig. 13: Schnittplan für ein Herstellungsverfahren von nahezu zylindrischen Becken mit einer Öffnung für eine Fischaufstiegsanlage,
- Fig. 14: eine Draufsicht auf Becken mit einer Kreissegmentfläche als Grundfläche.

Die erfindungsgemäße Fischaufstiegsanlage (1) mit im wesentlichen entlang einer vorgegebenen Gefällerichtung (G) hintereinander angeordneten teilzylindrischen Becken (4) mit Durchflußschlitzen (5) bildet einen treppenförmigen Bypass um eine in einem Fließgewässer (31F) angeordnete Querverbauung (34), beispielsweise einem Schottenwehr, Streichwehr od. dgl.. Die Fischaufstiegsanlage (1) erstreckt sich nahezu parallel zu dem Fließgewässer (31F) und ist als eine kompakte Baueinheit seitlich der Querverbauung (34) integriert, wozu ein oberer Anbindungsgraben (32) als einem oberseitigen Wasser-Zulauf (2) in die Fischaufstiegsanlage (1) den Staubereich (33) mit dem obersten Becken und ein unterer Anbindungsgraben (35) als einem unterseitigen Wasser-Ablauf (3) aus der Fischaufstiegsanlage (1) das unterste Becken mit dem Unterlauf verbindet.

Über den Wasser-Zulauf (2) werden die Becken (4) mit Wasser aus dem Staubereich (33) gespeist. Nach dem Durchfließen der Becken (4) verläßt das Wasser die Fischaufstiegsanlage (1) über den unterseitigen Wasser-Ablauf (3) in den Unterlauf (36) des Fließgewässers (31). Nach dem Verlassen der Strömung (S) aus dem unteren Anbindungsgraben (35) bzw. dem untersten Becken bildet sich beim Einmünden in den Unterwasserbereich (36) eine laminare Lockströmung mit einer sehr hohen Fließgeschwindigkeit aus, die den aufstiegswilligen Fischen den Weg in die Fischaufstiegsanlage (1) weist.

Der Durchmesser (d1) der Becken (4) ist abhängig von den örtlichen Gegebenheiten wie Stauhöhe, Weglänge oder Platzangebot. Aber auch finanzielle und fertigungstechnische Gesichtspunkte, durch beispielsweise den Einsatz handelsüblicher Rohre, geben bestimmte Durchmesser (d1) vor. Der Durchmesser (d1) von den Becken (4) liegt zwischen 0,8 bis 5 m, vorzugsweise 1 bis 3 m, Becken mit größeren Durchmesser (d1) werden zur Erzielung von sehr kompakten Ausführungsformen, wie bei in Talsperren (31T) integrierbaren Fischtreppen erforderlich, benötigt - Fig. 10 -.

Der die Strömungsgeschwindigkeit beeinflussende Durchmesser (d1) muß so gewählt sein, daß die fischartabhängigen maximal zulässigen Fließgeschwindigkeiten nicht überschritten werden.

Eine Höhendifferenz (Fallhöhe) zwischen hintereinander angeordneten Becken (4, 4a, 4b, 4c, 4d) beträgt 10 bis 25 cm, vorzugsweise 15 cm, bei den in Fließgewässern (31F) angeordneten Anlagen, und 25 cm bei den in Talsperren (31T) eingebauten Anlagen (1), weil dadurch die maximale Fließgeschwindigkeit von 1,10 m/s im Bodenbereich nicht überschritten wird. Die vorgegebene Fallhöhe richtet sich nach den Arten der in der Region vorkommenden Wandersalmoniden.

Die Steigung bzw. das Gefälle (G) der Fischaufstiegsanlage (1) wird durch die Höhendiffernz (Fallhöhe) und den Durchmesser (d1) der Becken (4) bestimmt. Dabei wird abhängig von den örtlichen Gegebenheiten das Kletter- bzw. Schwimmvermögen der wanderwilligen Lebewesen, wie Wandersalmoniden und Benthos-Organismen, berücksichtigt. Ein guter Kompromiß zwischen Baulänge der Fischaufstiegsanlage (1) und der maximalen Fließgeschwindigkeit wird bei einem relativen Gefälle (G) im Bereich von 20 % erzielt, in Einzelfällen ist das Gefälle (G) geringer, jedoch nicht kleiner als 14 %, oder höher. So beträgt das Gefälle (G), beispielsweise bei sehr großen Stauhöhen und geringem Platzangebot wie in Talsperren (31T), bis zu 30 %.

Die Höhe der Becken (4) ist abhängig von der kürzeren Mantellinie der in der Symmetrieebene (SE) des Beckens (4) liegenden Mantellinien, diese ist mindestens 70 cm lang.

Mit der erfindungsgemäßen Fischaufstiegsanlage (1) wird Wandersalmoniden sowie Benthos-Organismen die Überwindung der durch die Querverbauung (34) hervorgerufenen Stauhöhe (SH) bei täglichen Ortswechsel oder jahreszeitlichen Wanderungen ermöglicht.

Die Fischaufstiegsanlage (1) besteht aus einer Vielzahl von Becken (4) mit gleicher Grundfläche (4G), deren vertikale Durchflußschlitze (5) je einen Zulaufschlitz (5Z) und einen Ablaufschlitz (5A) bilden.

Innerhalb der Fischaufstiegsanlage (1) sind hintereinander angeordnete Becken (4a, 4b, 4c, 4d)) zur Bildung einer mäanderförmigen Passage gegeneinander ausgerichtet und derart seitlich zueinander versetzt, daß die Durchflußschlitze (5) jeweils quer zur Gefälle-Richtung (G) stehen. Dann wechselt die Strömung (S) beim Durchfließen der aufeinanderfolgender Becken (4) jedesmal ihre Drehrichtung (SD) und liegt im Ein- bzw. Auslaufbereich (4EB, 4AB) aus jedem Becken tangential an der Beckeninnenwand (40) an. Es bildet sich eine mäanderförmige Strömung (S) mit im Auslaufbereich (4AB) aus dem Becken(4) teilweise entgegen dem Gefälle (G) ansteigenden Abschnitten.

Die Becken (4) mit der gleichen Drehrichtung (SD) bilden zwei separate, durch die Durchflußschlitze (5) voneinander getrennte Einzelteile (1E), die die Längsseiten der Fischaufstiegsanlage (1) darstellen.

Jedes einzelne Becken (4) besteht aus mehreren Beckenwänden (11, 12), wobei eine erste Beckenwand (11) aus einem beliebig geformten teilzylindrischen Rohrstück (41, 41*)) und eine zweite zur ersten Beckenwand (11) gegenüberliegende Beckenwand (12) aus einem Teilstück (42, 42*) besteht, welches benachbarte Kanten (13a, 13b) von unmittelbar ober- und unterhalb angeordneten Rohrstücken (41, 41*) verbindet. Die beiden Beckenwände (11, 12) sind durch einen Zuflußschlitz (4Z) und einen Abflußschlitz (4A) voneinander getrennt. Jedes Becken (4) hat je einen Anteil auf einem der Einzelteile (1E) in der Fischaufstiegsanlage (1), daher bestehen die Einzelteile (1E), abhängig von der Anzahl der Becken (4), jeweils aus einer wechselnden Folge von einem Rohrstück (41, 41*) und einem Verbindungsstück (42, 42*). Die Beckenwände (40) bestehen vorzugsweise aus Fertigteilen aus Faser- oder Glasfaserzement.

Im montierten Zustand sind die aneinander stoßenden Kanten (13a) der Beckenwände (40) vertikal von einem ersten teilzylindrischen Rohr (60) als einem ersten Umlenkmittel (6) mit relativ zum Radius der Beckeninnenwände (40) wesentlich kleineren Radius ummantelt, so daß die Durchflußschlitze (5) über die gesamte Beckenhöhe begrenzt sind. So wird ein Abreißen des Strömungfadens (S), insbesondere im Auslaufbereich (4AB) der Becken (4) verhindert, und die Durchflußschlitz (5) sind strömungssteuernd eingefaßt. Die Breite der Durchflußschlitze (5) beträgt mindestens 30 mm, vorzugsweise mindestens 45 mm, damit die Fische in dem Durchflußschlitz (5) nicht verklemmen.

Der Beckenboden (28) ist rauh strukturiert, damit die Fließgeschwindigkeit in bodennahen Bereichen niedrig ist und Kleinfische sowie Benthos-Organismen in den Becken (4) aufsteigen können. Zur Bildung eines Lückensystems sind in/auf dem Beckenboden (28) entweder faust- bis kindskopfgroße Sedimente (29S) festgelegt - Fig. 2 - oder ist mit einer amorphen, weitmaschigen Matte (29M) in Form eines Vlieses, welches untereinander verbundene Hohlräume aufweist, bedeckt - Fig 8 -. Der kontinuierliche Übergang zwischen den einzelnen Becken (4) erlaubt die Wanderung aller Lebewesen.

Die Fig. 1 und 2 zeigen eine erste Ausführungsform der Fischaufstiegsanlage (1), welche aus Becken (4) mit einer Halbkreisfläche als Grundfläche (4G) besteht.

Das die erste Beckenwand (11) bildende Rohrstück (41) hat einen Zentriwinkel (4ZW) von 180° und das die zweite Beckenwand (12) bildende Verbindungsstück (42T) ist eine Platte (42), deren Länge kleiner als der Durchmesser (d1) des Halbkreises bzw. des Beckens (4) ist. Zur Bildung eines Beckens (4) ist die Platte (42) auf dem Durchmesser der Halbkreislinie angeordnet, d.h. in der Öffnung zwischen den Kanten (13) der ersten Beckenwand (12). Der verbleibende Abstand zur benachbarten Beckeninnenwand bildet den Zufluß- und einen Abflußschlitz (5Z, 5A).

Die Mittelpunkte des Halbkreis-Durchmessers (d1) liegen auf einer imaginären, in Richtung des Gefälles (G) orientierten Geraden (G1), wogegen die Mittelpunkte (MP) der halbzylindrischen Becken (4) auf einer zick-zackförmig verlaufenden Linie (V) angeordnet sind, so daß alle Durchflußschlitze (5) rechtwinklig zum Gefälle (G) stehen und sich im Bereich der Durchflußschlitze (5) eine tangential an der Beckeninnenwand verlaufende Zulauf- bzw. Ablaufströmung (S) ausbildet.

Die Fischaufstiegsanlage (1) besteht aus zwei Einzelteilen (1E) mit abwechselnd hintereinander angeordneten Halbrohrstücken (41) und Platten (42*). Für eine Endmontage der Fischaufstiegsanlage (1) werden die im Betrieb vormontierten Einzelteile (1E) zur Baustelle transportiert. Alternativ können die Einzelteile (1E) auch vor Ort im Trockenen zusammengesetzt werden. Dann werden die Bodenplatten (28P) eingeklebt und die Fertigbecken-Anlage wird auf einem feuerverzinkten Stahlleitergerüst festgelegt, das anschließend mit Beton-Einzelfundamenten (43) im Uferbereich verankert wird.

Diese erste Ausführungsform wird über einen unteren Anbindungsgraben (35) und über einen oberen Anbindungsgraben (32) (nicht dargestellt) an das Fließgewässer (31F) angeschlossen. Die Anbindungsgräben (32, 35) sind obenseitig offene Kanäle mit einem rechteckigem Querschnitt aus Faserzement, die jeweils das oberste und unterste halbzylindrische Becken (4) mit dem Fließgewässer (31F) verbinden. Eine mehrteilige Bauweise gestattet eine optimale, flexible Anbindung an das Fließgewässer (31F); so können prinzipiell auch winklig verlaufende Fischaufstiegsanlagen (1) konstruiert werden.

In Fig. 2 ist ein Durchflußschlitz (5) mit über der Höhe sich änderndem Querschnitt dargestellt. Durch die Querschnittsverengung wird die benötigte Wassermenge für einen sicheren Betrieb der Anlage (1) gesenkt und eine Feinregulierung des Wasserstandes kann vorgenommen werden. Zur Querschnittsveränderung sind beidseitig über die den Durchflußschlitz (5) begrenzenden Umlenkmittel (6) je zwei kürzere teilzylindrische Rohre (61, 62) mit einer längsseitigen Öffnung als Überschieblinge (61, 62) geschoben. Diese Überschieblinge (61, 62) haben einen, verglichen mit einem Außendurchmesser des unmittelbar darunter angeordneten Rohres (60, 61), etwas größeren Innendurchmesser - Fig. 9 -. Vorzugsweise ist der Durchflußschlitz (5) bodenseitig verengt. Bevorzugte Abstufungen der Durchflußschlitzbreiten sind 4,5 cm, 6,0 cm und 8,5 cm, bei einer Wassermenge von 60 l/sec. oder 8,0 cm, 10,5 cm und 13,0 cm bei einer Wassermenge von 600 l/sec.

Hierzu sind die Kanten (13) der Becken (4) von Überschieblingen (60, 61, 62) mit abnehmender Länge und zunehmendem Durchmesser ummantelt. Selbstverständlich können auch andere Abstufungen, je nach Erfordernis, gewählt werden.

In den Fig. 3 und 4 ist die zweite Ausführung einer Fischaufstiegsanlage (1) dargestellt. Die Becken (4) bestehen aus zwei verschieden großen Rohrstücken (41*, 42) als einer ersten und zweiten Beckenwand (11, 12), welche zur Bildung des Kreissegmentes als Grundfläche (4G) entgegengesetzt zueinander angeordnet sind. Die erste Beckenwand (11) hat einen Zentriwinkel von 300° und die zweite Beckenwand (12) hat einen Zentriwinkel von 50°. Die zweite Beckenwand (12) ist ungefähr auf der Sehne der ersten Beckenwand (11) angeordnet.

Die dargestellte Anlage (1) besteht aus elf Stufen, wobei die ersten Beckenwände (11) mit ihren Öffnungen (4Ö) wechselseitig zur Mittellinie (M) der Fischaufstiegsanlage (1) ausgerichtet sind. Die Mittelpunkte (MP) der Becken (4a, 4c; 4b, 4d) mit gleicher Ausrichtung liegen auf zwei parallelen, imaginären, in Richtung des Gefälles (G) verlaufenden Geraden (G1, G2). Die Mittelpunkte (MP) der hintereinander angeordneten Becken (4a, 4b, 4c, 4d)) sind auf einer imaginären, zick-zackförmig verlaufenden Verbindungslinie (V), wobei der sich zwischen den Schenkeln ergebende Winkel immer gleich groß ist. Die Durchflußschlitze (5) liegen deckungsgleich mit der Verbindungslinie etwa in Mitte eines Schenkels.

Die Becken (4) bilden je eine Stufe, da innerhalb eines Beckens (4) der Beckenboden (28) nicht mit gleichem Gefälle (G) verläuft, sondern im Einlaufbereich (4EB) des Gefälles (G) geneigt ist und im Auslaufbereich (4AB) durch eine Gegen-Berme (8) waagerecht oder schwach entgegen dem Gefälle (G) ansteigt - Fig.4 -. Vorzugsweise hat die Steigung der Gegen-Berme (8) ungefähr den gleichen Wert wie das Gefälle (G). Die hintereinander liegenden Becken (4a, 4b, 4c, 4d) stellen eine Art, entlang einer schiefen Ebene verlaufenden Wendeltreppe mit jeweils um mehr als 180° gebrochener Gehlinie (Strömungsfaden) dar, wobei sich Austritt (Wasser-Zulauf( (2) und Antritt (Wasser-Ablauf) (3) an derselben Teppenseite, nämlich auf der gewässerseitigen Treppenseite, befinden.

Weiterhin haben die Becken (4) eine Überlaufrinne (22) aus Faserzement, wozu die zweite Beckenwand (12) und die sich unmittelbar anschließende erste Beckenwand (11) des nächsten Beckens (4) jeweils am oberseitigen Rand (16) einer gemeinsamen Ecke (17) einen halbkreisflächigen Ausschnitt (18) haben. Der Scheitelpunkt des Ausschnittes (18) befindet sich etwa 15 cm vom oberseitigen Beckenrand (16). Die Mittelpunkte der Ausschnitte liegen in einer Achse (21), so daß in die Ausschnitte (18) eine in Schmelzmörtel eingebettete Halbschale (22) einlegbar ist. Diese Überlaufrinne (22) wird bei Hochwasserstand beflutet und dient insbesondere den Großsalmoniden, wie Lachsen und Meeresforellen, als Aufstiegshilfe.

Fig. 4 zeigt die auf einer Stahlbetonplatte (54) montierte Fischaufstiegsanlage (1). Zur Herstellung wird im Uferbereich in der Nähe der Querverbauung eine Sauberkeitsschicht (56) mit dem örtlichen Gefälle (G) abgezogen. Nach außen werden die Becken (4) mit verzinkten Winkeln auf der Betonplatte (54) gesichert. Innenseitig liegende Nähte zwischen Beckenboden (28) und Beckenwänden (4) werden mit einer Thiocolfuge oder Estrich abgedichtet. Zur Stabilisierung sind die Becken (4) außenseitig mit einem schrägen Zementfuß (55) aus Spezialzement abgestützt, welcher auch gleichzeitig abdichtend wirkt. Untereinander sind die Becken (4) mit Bolzen aus Edelstahl gem. Fig. 9 und 10 miteinander verbunden. Auf die Kanten (13) der Beckenwände (11, 12) ist jeweils mindestens ein teilzylindrisches Rohr (60, 61, 62) als Überschiebling (60, 61, 62)) aufgesteckt, der mit Hilfe von Edelstahlschrauben gesichert ist. Die entstehenden Hohlräume werden mit Schmelzzementmörtel ausgegossen und die oberseitigen Kopfenden abgerundet.

Nach der Montage wird die Fischaufstiegsanlage (1), wie Fig. 3 zeigt, über durch Palisaden oder Betonwände gesicherte Anbindungsgräben (32, 35) zum oberen Staubereich (33) und zum unteren Abflußbereich (36) in das Fließgewässer (31F) integriert.

In den Fig. 5 bis 7 ist die Einbindung einer Fischaufstiegsanlage (1) in ein Fließgewässer (31) mit einer Querverbauung (34) schematisch dargestellt.

Bei Fig. 5 ist eine Fischaufstiegsanlage (1) gemäß Fig. 1 und 2 parallel zu einem Wehr (34) in dessen Uferbereich (44) integriert, im Wasser-Ablauf (3) sind zur Verstärkung einer Lockströmung (S) zusätzlich Sedimente (29) festgelegt.

Das ein Wehr (34) überströmende Rieselwasser (31) wird mittels eines Leit- und Umlenkorganes (39) in Form einer Rinne aufgefangen und über ein sich daran anschließendes Abflußrohr (53) in das unterste Becken (4) der Anlage (1) geleitet, so daß die Lockströmung am Ablauf (3) verstärkt wird.

Im Wasser-Zulauf (2) in das oberste Becken (4) ist eine justierbare Einlaufklappe (37) oder ein Schieber quer zur Strömung (S) angeordnet, hierdurch kann die zulaufende Wassermenge reguliert werden. Die Klappe (37) ist vorzugsweise derart angelenkt, daß der Staudruck auf die angeströmte Klappe (37), welcher durch die über die Querverbauung (34) fließende Strömung hervorgerufen wird, die Klappe (37) dicht verschließt. Alternativ kann ein Schieber vorgesehen sein. Für Wartungsarbeiten wird der Wasser-Zulauf (2) in die Fischaufstiegsanlage (1) vollständig abgesperrt, so daß die Fischaufstiegsanlage (1) leer läuft.

Fig. 6 zeigt ein in das Fließgewässer (31F) eingebautes Schottenwehr (34) mit einer Fischaufstiegsanlage (1) als Bypass gemäß den Fig. 3 und 4, wobei der untere Anbindungsgraben (35) zur Verstärkung der Lockströmung spitzwinkelig zum Unterlauf (36) angeordnet ist. Vorzugsweise mündet der Wasser-Ablauf (3) mit etwa 30° zum zugeordneten Ufer in den Unterlauf (36).

Der obere und untere Anbindungsgraben (32, 35) zum oberen Staubereich (33) bzw. zum unteren Abflußbereich (36) des Fließgewässers (31F) ist durch Palisaden gesichert. Im Zulauf in den oberen Anbindungsgraben (32) sind Palisadenschotten zur Bildung eines in Strömungsrichtung spitz zulaufenden Trichters festgelegt, und es ist eine 30 cm unterhalb der Wasseroberfläche liegendene Schwelle vorhanden, um das Geschiebe zu halten und ein Eintragen von Treibgut in die Anlage (1) zu unterbinden.

Das über das Schottenwehr (34) abfließende Rieselwasser (32) wird mittels eines am Fußpunkt der Wehrstützfläche angeordneten Leit- und Umlenkorganes (39) in Form einer Bohle aus Lärchenholz, mit einem Querschnitt von 6 x 12 cm, zum unterseitigen Anbindungsgraben (35) geleitet.

In Fig. 7 ist eine analoge Anordnung der Fischaufstiegsanlage (1) gemäß Fig. 6 dargestellt, wobei ein Streichwehr (34) das Fließgewässer (31F) aufstaut und der untere Anbindungsgraben (35) nicht spitzwinklig angeordnet ist.

Die Fig. 16 bis 19 zeigen Schnittpläne für die Herstellung von Becken (4) gemäß den Fig. 1 bis 4 für eine Fischaufstiegsanlage (1).

Zuerst wird ein Rohr (45) durch quer zur Rohrachse (45A) verlaufende Schnitte in gleiche große Rohrstücke mit einer Länge von mindestens 70 cm zerschnitten, wobei die Schnitte abwechselnd rechtwinklig zur Rohrachse (45A) verlaufende Querschnitte (QS) und unter einem durch ein Gefälle (G) in der Fischaufstiegsanlage (1) vorgegebenen Schnittwinkel (α) zur Rohrachse (45A) verlaufenden Querschnitte (QS) sind. Der Schnittwinkel beträgt zwischen 10 bis 40°, vorzugsweise von 15° bis 20° für in Fließgewässern (31F) und von 20° bis 30° für in Talsperren (31T) integrierte Fischaufstiegsanlagen (1).

Dann wird aus den einzelnen Rohrstücken (45T) durch zur Rohrachse (45A) parallel verlaufende, auf einer Seite der Symmetrieebene (SE) angeordnete Koaxialschnitte (KS) je ein Sektorstück (42) herausgeschnitten, so daß Rohrstücke (45T) mit einer teilzylindrischen Form und Öffnung entstehen. Die so gefertigten Rohrstücke (41, 41*) bilden eine ersten Beckenwand (11) eines teilzylindrischen Beckens (4).

Das Rohr (45) hat einen Durchmesser (d1) von 0,8 bis 5 m, vorzugsweise 1 bis 3 m. Es werden vorzugsweise handelsübliche Fertigrohre (45) aus Faserzement, Glasfaserzement od. dgl. als Ausgangsmaterial verwendet.

Mit dem in den Fig. 16 und 17 aufgezeigten Verfahren werden Becken (4) mit einer halbkreisförmigen Grundfläche (4G) hergestellt. Hierzu werden die einzelnen Rohrstücke (45T) jeweils durch in ihrer Symmetrieebene (SE) liegende Koaxialschnitte (KS) in zwei gleich große Hälften (41) geteilt, welche als erste Beckenwände (11) zur Bildung eines halbzylindrischen Beckens (4) in die Fischaufstiegsanlage (1) integrierbar sind.

Mit dem in den Fig. 18 und 19 aufgezeigten Verfahren werden Becken (4) mit einem Kreissegment als Grundfläche (4G) hergestellt, bei dem die Öffnung (4Ö) nach Herausschneiden des Sektorstücks (42)einen Zentriwinkel (ZW) zwischen 10 und 180°, vorzugsweise 20 und 60°, hat. Das Sektorstück (42) wird in dem Bereich aus dem Rohrstück (45T) herausgeschnitten, wo eine winkelhalbierende Ebene (WE) des gebildeten Sektors (42, 4Ö)) rechtwinklig zu der Symmetrieebene (SE) steht.

Durch weitere Koaxialschnitte wird das herausgeschnittene Sektorstück (42) in mindestens zwei Teilstücke (42T) getrennt, um zweite Beckenwände (12) bildende Verbindungstücke (42) zu erzeugen. Diese Verbindungsstücke (42) werden zum Schließen des Zwischenraumes von benachbarten Kanten (13a, 13b) nebeneinander angeordneter Becken (4a, 4c, 4b, 4d) mit gleicher Ausrichtung verwendet.

## Patentansprüche

1. Fischaufstiegsanlage zur Überwindung einer Stauhöhe mit einem oberseitigen Wasser-Zulauf (2) und einem unterseitigen Wasser-Ablauf (3) und mit dazwischenliegenden, im wesentlichen in einer Gefällerichtung (G) hintereinander angeordneten Becken (4), die jeweils einen Zuflußschlitz (5Z) und einen Abflußschlitz (5A) als vertikale Durchflußschlitze (5) und jeweils Umlenkmittel (6) zur Bildung einer mäanderförmigen Passage aufweisen, **dadurch gekennzeichnet, daß** die Becken (4) jeweils eine teilzylindrische Beckeninnenwand (40) haben, und daß die hintereinander angeordneten Becken (4a, 4b, 4c) gegeneinander ausgerichtet und derart seitlich zueinander versetzt sind, so daß die Durchflußschlitze (5) jeweils quer zur Gefälle-Richtung (G) stehen, und daß die Durchflußschlitze (5) jeweils beidseitig von einem ersten vertikalen teilzylindrischen Rohr (60) als einem ersten Umlenkmittel (6) mit relativ zum Radius der Beckeninnenwände (40) wesentlich kleineren Radius über die gesamte Beckenhöhe begrenzt sind.

2. Fischaufstiegsanlage nach Anspruch 1, **dadurch gekennzeichnet, daß** über dem ersten teilzylindrischen Rohr (60) mindestens ein zweites, kürzeres vertikales teilzylindrisches Rohr (61, 62) mit einem verglichen zu einem Außendurchmesser des unmittelbar darunter angeordneten Rohres (60, 61) etwas größeren Innendurchmesser festgelegt ist, wodurch sich eine Querschnittsänderung über der Höhe des Durchflußschlitzes (5) ergibt.

3. Fischaufstiegsanlage nach Anspruch 1 oder 2, **dadurch gekennzeichnet, daß** die Breite des Durchflußschlitzes (5) mindestens 30 mm, vorzugsweise mindestens 45 mm, beträgt.

4. Fischaufstiegsanlage nach einem oder mehreren der Ansprüche 1 bis 3, **dadurch gekennzeichnet, daß** die Becken (4) eine gleiche Grundfläche (4G) aufweisen.

5. Fischaufstiegsanlge nach einem oder mehreren Ansprüche 1 bis 4, **dadurch gekennzeichnet, daß** hintereinander angeordnete Becken (4,4a,4b,4c) zueinander eine Höhendifferenz (Fallhöhe) von 10 bis 25 cm, vorzugsweise 15 cm, aufweisen.

6. Fischaufstiegsanlage nach einem oder mehreren der Ansprüche 1 bis 5, **dadurch gekennzeichnet, daß** die kürzere Mantellinie der in der Symmetrieebene (SE) eines Beckens (4) liegenden Mantellinien mindestens 70 cm einnimmt.

7. Fischaufstiegsanlage nach einem oder mehreren der Ansprüche 1 bis 6, **dadurch gekennzeichnet, daß** die Beckenwände (40) eines einzelnen Beckens (4) von einem teilzylindrischen Rohrstück (41, 41*) als einer ersten Beckenwand (11) und einem gegenüberliegenden Teilstück (42, 42*) als einer zweiten Beckenwand (12) gebildet sind, und das Teilstück (42) als Verbindungsstück benachbarte Kanten (13a, 13b) von den unmittelbar ober- und unterhalb angeordneten Rohrstücken der gegenüberliegenden Becken (4a, 4c) verbindet, und diese Kanten (13a, 13b) von dem ersten Umlenkmittel (6) ummantelt sind.

8. Fischaufstiegsanlage nach einem oder mehreren der Ansprüche 1 bis 7, **dadurch gekennzeichnet, daß** das Rohrstück (41, 41*) als Kreisbogen einen Zentriwinkel (4ZW) größer als 180°, vorzugsweise 300°, hat und daß zur Bildung eines einzigen Beckens (4) das Teilstück (42, 42*) auf einer den Kreisbogen bildenden Sehne angeordnet ist, so daß der Flächeninhalt des eine Grundfläche (4G) des Beckens (4) bildenden Kreissegmentes größer als eine Halbkreisfläche ist.

9. Fischaufstiegsanlage nach Anspruch 8 , **dadurch gekennzeichnet, daß** die Becken (4) zur Bildung einer Stufe in ihrem Auslaufbereich (4AB) eine Gegen-Berme (8) mit einem waagerechten oder schwach entgegen dem Gefälle (G) ansteigenden Beckenboden (28) aufweisen.

10. Fischaufstiegsanlage nach Anspruch 8 oder 9, **dadurch gekennzeichnet, daß** das Teilstück (42, 42*) und das sich unmittelbar anschließende Rohrstück (41*) jeweils am oberseitigen Rand (16) einer gemeinsamen Ecke einen halbkreisflächigen Ausschnitt (18) aufweisen, wobei die Mittelpunkte der Halbkreisflächen in einer Achse (A) liegen, und in die Ausschnitte (18) eine Halbschale (22) als eine Überlaufrinne (22) eingelegt ist.

11. Fischaufstiegsanlage nach Anspruch 7, **dadurch gekennzeichnet, daß** das Rohrstück (41*) einen Zentriwinkel (4ZW) größer als 180°, vorzugsweise 340°, hat und das Teilstück (42, 42*) derart innerhalb des Rohrstücks (41*) angeordnet ist, daß innerhalb eines Beckens (4) nahezu flächengleiche, im Querschnitt elliptische Teilbecken (4T) und zwischen den Umlenkmitteln (6) und den gegenüberliegenden Beckeninnenwänden (11, 12) Verengungen (5E) als Durchflußschlitze (5) entstehen.

12. Fischaufstiegsanlage nach Anspruch 11, **dadurch gekennzeichnet, daß** hinter den Verengungen (5E) teilweise ein teilzylindrisches Rohrstück (13) als ein zweites Umlenkmittel (62) festgelegt ist.

13. Fischaufstiegsanlage nach Anspruch 7, **dadurch gekennzeichnet, daß** das Rohrstück (41) einen Zentriwinkel (4ZW) von 180° hat und das Teilstück (42, 42*) auf dem Durchmesser des Halbkreises angeordnet ist.

14. Fischaufstiegsanlage nach einem oder mehreren der Ansprüche 1 bis 13, **dadurch gekennzeichnet, daß** die Mittelpunkte der Becken (4a, 4b; 4c, 4d) mit gleicher Ausrichtung jeweils eine imaginäre, in Richtung des Gefälles verlaufende Gerade (G1, G2) bilden.

15. Fischaufstiegsanlage nach Anspruch 14, **dadurch gekennzeichnet, daß** die Mittelpunkte zueinander gleichmäßig beabstandet sind.

16. Fischaufstiegsanlage nach einem oder mehreren der Ansprüche 7 bis 15, dadurch gekennzeichent, daß die zweite Beckenwand (12) ein Rohrsektor (42) mit relativ zur Bogenlänge der ersten Beckenwand (11) kürzerer Bogenlänge ist und zur Bildung eines einzelnen Beckens (4) sich zur gegenüberliegenden Beckeninnenwand (40) entgegengesetzt gekrümmt erstreckt.

17. Fischaufstiegsanlage nach einem oder mehreren der Ansprüche 7 bis 15, dadurch gekennzeichent, daß die zweite Beckenwand (12) eine Platte (42*) mit einer kürzeren als den Durchmesser (d1) der Becken (4) aufweisenden Länge ist.

18. Fischaufstiegsanlage nach einem oder mehreren der Ansprüche 1 bis 17, **dadurch gekennzeichnet, daß** die Becken (4) einen rauhstrukturierten Beckenboden (28) zur Bildung eines Lückensystems (30) aufweisen, wozu bodenseitig in den Becken (4) faust- bis kindskopfgroße Sedimente (29S) und/oder eine amorphe, weitmaschige Matte (29M) mit untereinander verbundenen Hohlräumen festgelegt sind.

19. Fischaufstiegsanlage nach einem oder mehreren der Ansprüche 1 bis 18, **dadurch gekennzeichnet, daß** dieselbe eine einen Bypass bildende Baueinheit (1) um eine ein Fließgewässer (31F) aufstauende Querverbauung (34) ist und mittels seitlich gesicherter Anbindungsgräben (32, 35) an das Fließgewässer (31F) angeschlossen ist, wobei ein oberer Anbindungsgraben (32) aus dem Staubereich (33) vor der Querverbauung (34) und ein unterer Anbindungsgraben (35) in den Unterlauf (36) unterhalb der Querverbauung (34) führt.

20. Fischaufstiegsanlage nach einem oder mehreren der Ansprüche 1 bis 18, **dadurch gekennzeichnet, daß** dieselbe eine mehrteilige, einen Bypass bildende Aufstiegsanlage (1) zur Überwindung einer Staumauer (34M) von einer Talsperre (31T) bildet, in welcher stauraumseitig der Staumauer (34M) ein oberer Anlagen-Abschitt (10) und luftraumseitig der Staumauer (34M) ein unterer Anlagen-Abschnitt (1U) mit einem Anbindungsgraben (35) zum Unterlauf (36) festgelegt ist und beide Abschnitte (10, 1U) durch einen die Staumauer (34M) durchquerenden Verbindungskanal (1V) verbunden sind.

21. Fischaufstiegsanlage nach Anspruch 19 oder 20, **dadurch gekennzeichnet, daß** der Anbindungsgraben (35) in den Unterlauf (36) unter einem spitzen Winkel zum zugeordneten Ufer, vorzugsweise von etwa 30°, einmündet.

22. Fischaufstiegsanlage nach Anspruch 19 oder 20, **dadurch gekennzeichnet, daß** ein Leit- und Umlenkorgan quer im Unterlauf zwischen den seitlichen Ufern (38) verläuft, dessen aufstiegsanlagenseitiges Ende im Mündungsbereich des unteren Anbindungsgrabens (35) liegt.

23. Fischaufstiegsanlage nach einem oder mehreren der Ansprüche 1 bis 22, **dadurch gekennzeichnet, daß** diesselbe aus vormontierten Einzelteilen (1E) mit gleich orientierten Rohrstücken (41, 41*) und dazwischen angeordneten Verbindungstücken (42, 42*) besteht, die auf einer Bodenplatte (28P) mittels Einzelfundamente (43) im Uferbereich (44) verankerbar sind.

24. Verfahren zur Herstellung eines Beckens für eine Fischaufstiegsanlage, nach einem oder mehreren der Ansprüche 1 bis 23, **dadurch gekennzeichnet, daß** ein Rohr (45) durch abwechselnd rechtwinklig zur Rohrachse (45A) verlaufende Querschnitte (QR) und unter einem durch ein Gefälle (G) in der Fischaufstiegsanlage (1) vorgegebenen Schnittwinkel (W) zur Rohrachse (45A) verlaufende Querschnitte (QS) in mehrere gleiche Rohrstücke (45T) zerteilt wird, und dann aus den einzelnen Rohrstücken (45T) durch zur Rohrachse (45A) parallel verlaufende Koaxialschnitte (KS) mindestens eine teilzylindrische Beckenwand (40) hergestellt wird.

25. Verfahren nach Anspruch 24, **dadurch gekennzeichnet, daß** der Schnittwinkel α von 10 bis 40°, vorzugsweise von 15° bis 20° für in Fließgewässern (31F) und von 20° bis 30° für in Talsperren (31T) intergierte Fischaufstieganlagen (1).

26. Verfahren nach Anspruch 24 oder 25, **dadurch gekennzeichnet, daß** die Rohrstücke (45T) eine Länge von mindestens 70 cm aufweisen.

27. Verfahren nach einem oder mehreren der Ansprüche 24 bis 26, **dadurch gekennzeichnet, daß** aus den einzelnen Rohrstücken (45T) zur Bildung einer Beckenwand (40) mit einer Öffnung (4Ö) mittels einseitig zu ihrer Symmetrieebene (SE) angeordneter Koaxialschnitte (KS) ein Sektorstück (42) herausgeschnitten wird.

28. Verfahren nach einem oder mehreren der Ansprüche 24 bis 27, **dadurch gekennzeichnet, daß** das Sektorstück (42) in dem Bereich aus dem Rohrstück (45T) herausgeschnitten wird, wo eine winkelhalbierende Ebene (WE) der Öffnung (4Ö) rechtwinklig zu der Symmetrieebene (SE) steht.

29. Verfahren nach Anspruch 27 oder 28, **dadurch gekennzeichnet, daß** das Sektorstück (42) einen Zentriwinkel (4ZW) zwischen 10 und 180°, vorzugsweise 20 und 60°, hat.

30. Verfahren nach einem oder mehreren der Ansprüche 24 bis 26, **dadurch gekennzeichnet, daß** die einzelnen Rohrstücke (45T) jeweils durch in ihrer Symmetrieebene (SE) liegende Koaxialschnitte (KS1) in zwei gleichgroße Hälften (41) geteilt werden, welche als Beckenwand (40) zur Bildung eines Halbzylinderbeckens (41) in die Fischaufstiegsanlage (1) integrierbar sind.

31. Verfahren nach einem oder mehreren der Ansprüche 24 bis 26, **dadurch gekennzeichnet, daß** das Sektorstück (42) durch mindestens einen weiteren Koaxialschnitt (KS2) in mindestens zwei Teilstücke (42T) getrennt wird, welche zur Bildung eines Beckens (4) zwischen benachbarten Kanten (13a, 13b) von nebeneinander angeordneten Beckenwänden (4a, 4c) mit gleicher Ausrichtung in die Fischaufstiegsanlage (1) integrierbar sind.

32. Verfahren nach einem oder mehreren der Ansprüche 24 bis 31, **dadurch gekennzeichnet, daß** das Rohr (45) einen Durchmesser (d1) von 0,8 bis 5 m, vorzugsweise 1 bis 3 m, hat.

33. Verfahren nach einem oder mehreren der Ansprüche 24 bis 32, **dadurch gekennzeichnet, daß** die Rohre (45) aus Faserzement, Glasfaserzement oder dgl. entstehen.

## Claims

1. A fish ladder to bypass a vertical descent with an upstream water inlet (2) and a downstream water outlet (3) and with basins (4) arranged between them substantially in a downstream direction (G), each of which has an inflow slot (5Z) and an outflow slot (5A) as vertical through-flow slots (5), and deflection means (6) to form a meandering passage, **characterized in that** the basins (4) each have a partially cylindrical inner basin wall (40) and that the successive basins (4a, 4b, 4c) are oriented against one another and offset laterally in such a way that the through-flow slots (5) run transversely to the direction of slope (G) and that the through-flow slots (5) each are bounded on both sides by a vertical partially cylindrical pipe (60) as a first deflection means (6) with a significantly smaller radius along the entire basin height relative to the radius of the inner basin walls (40).

2. A fish ladder according to claim 1, **characterized in that** over the first partially cylindrical pipe (60) at least one second, shorter vertical partially cylindrical pipe (61, 62) is provided with a somewhat larger interior diameter compared to an exterior diameter of the pipe (60, 61) provided immediately underneath, so that a change in cross section results above the height of the through-flow slot (5).

3. A fish ladder according to claim 1 or 2, **characterized in that** the width of the through-flow slot (5) is at least 30 mm, preferably at least 45 mm.

4. A fish ladder according to one or more of the claims 1 to 3, **characterized in that** the basins (4) have an identical base area (4G).

5. A fish ladder according to one or more of the claims 1 to 4, **characterized in that** successive basins (4, 4a, 4b, 4c) have a height difference (height of fall) from one basin to the other of approximately 10 to 25 cm, preferably 15 cm.

6. A fish ladder according to one or more of the claims 1 to 5, **characterized in that** the shorter surface line of the surface lines located in the plane of symmetry (SE) of a basin (4) is at least 70 cm.

7. A fish ladder according to one or more of the claims 1 to 6, **characterized in that** the basin walls (40) of an individual basin (4) are formed by a partially cylindrical pipe section (41, 41*) as a first basin wall (11) and an opposite segment (42, 42*) as a second basin wall (12) and the segment (42) connects, as a connection piece, adjacent edges (13a, 13b) of the pipe sections immediately above and below belonging to the opposite basins (4a, 4c) and these edges (13a, 13b) are encompassed by the first deflection means (6).

8. A fish ladder according to one or more of the claims 1 to 7, **characterized in that** the pipe section (41, 41*), as a circular arc, has a center angle (4ZW) larger than 180°, preferably 300°, and that, to form a single basin (4), the segment (42, 42*) is arranged on a chord forming the circular arc, so that the area of the segment of the circle forming the base (4G) of the basin (4) is larger than the area of a semicircle.

9. A fish ladder according to claim 8, **characterized in that**, to form a step in their outlet area (4AB) the basins (4) have a counter-berm (8) with a basin floor (28), which is horizontal or rises slightly against the slope (G).

10. A fish ladder according to claim 8 or 9, **characterized in that** the segment (42, 42*) and the immediately adjoining pipe section (41*) each have a semi-circular cutout (18) on the upper edge (16) of a common comer, with the center points of the areas of the semicircle being located in one axis (A) and a semi-circular shell (22) inserted into the cut-outs (18) as a flow-off channel (22).

11. A fish ladder according to claim 7, **characterized in that** the pipe section (41*) has a center angle (4ZW) larger than 180°, preferably 340°, and the segment (42, 42*) is arranged inside the pipe section (41*) in such a way that partial basins (4T) of nearly identical areas with an elliptic cross section are produced within a basin (4) and constrictions (5E) are produced as through-flow slots (5) between the deflection means (6) and the opposite inner basin walls (11, 12).

12. A fish ladder according to claim 11, **characterized in that** a partially cylindrical pipe section (13) is provided behind part of the constrictions (5E) as a second deflection means (62).

13. A fish ladder according to claim 7, **characterized in that** the pipe section (41) has a center angle (4ZW) of 180° and the segment (42, 42*) is arranged on the diameter of the semicircle.

14. A fish ladder according to one or more of the claims 1 to 13, **characterized in that** the center points of the basins (4a, 4b; 4c, 4d) with the same orientation each form an imaginary straight line (G1, G2) extending in the direction of the slope.

15. A fish ladder according to claim 14, **characterized in that** the center points are spaced at an equal distance.

16. A fish ladder according to one or more of the claims 7 to 15, **characterized in that** the second basin wall (12) is a pipe sector (42) with a shorter arc length relative to the arc length of the first basin wall (11) and that it curves in the opposite direction toward the opposite inner basin wall (40) to form an individual basin (4).

17. A fish ladder according to one or more of the claims 7 to 15, **characterized in that** the second basin wall (12) is a slab (42*) whose length is shorter than the diameter (d1) of the basins (4).

18. A fish ladder according to one or more of the claims 1 to 17, **characterized in that** the basins (4) have a basin floor (28) with a rough texture to form a gap system (30) for which sediments (29S) of fist size to child's head size and/or an amorphous wide-mesh mat (29M) with interconnected hollow spaces are provided along the floor of the basins (4).

19. A fish ladder according to one or more of the claims 1 to 18, **characterized in that** the fish ladder is a construction unit (1) forming a bypass around a dam (34) built to dam a flowing watercourse (31F), and that it is connected to said flowing watercourse (31F) by means of laterally secured connection trenches (32, 35), with an upstream connection trench (32) leading out of the reservoir area (33) in front of the dam (34) and a downstream connection trench (35) leading into the downstream region (36) below the dam (34).

20. A fish ladder according to one or more of the claims 1 to 18, **characterized in that** the fish ladder is a multi-part fish ladder (1) forming a bypass to bypass a masonry dam (34M) of a catchment basin (31T) in which an upstream portion (1O) of the system on the reservoir side of the masonry dam (34M) and a downstream portion (1U) of the system on the air space side of the masonry dam (34M) are provided with a connection trench (35) to the downstream region (36), and both portions (1O, 1U) are connected via a connection channel (1V) that passes through the masonry dam (34M).

21. A fish ladder according to claim 19 or 20, **characterized in that** the connection trench (35) discharges into the downstream region (36) at an acute angle of preferably 30° to the corresponding river bank.

22. A fish ladder according to claim 19 or 20, **characterized in that** a guiding and deflection means whose end facing the fish ladder is located in the discharge area of the downstream connection trench (35) extends crosswise in the downstream region between the lateral river banks (38).

23. A fish ladder according to one or more of the claims 1 to 22, **characterized in that** the fish ladder comprises preassembled piece parts (1E) with pipe sections (41, 41*) of the fish ladder orientation and connection pieces (42, 42*) between them, which can be anchored with separate foundations (43) on a floor slab (28P) in the area of the river bank (44).

24. A method to construct a basin for/in a fish ladder, to one or several of the claims 1 through 23, **characterized in that** a pipe (45) is separated into a plurality of pipe sections (45T) of the same size by means of cross cuts (QR) perpendicular to the pipe axis (45A) alternating with cross cuts (QS) at a cutting angle (W) to the pipe axis (45A), with the cutting angle (W) determined by the slope (G) in the fish ladder (1), and the individual pipe sections (45T) are subsequently used to construct at least one partially cylindrical basin wall (40) by means of coaxial cuts (KS) parallel to the pipe axis (45A).

25. A process according to claim 24, **characterized in that** the cutting angle α is from 10 to 40°, preferably from 15° to 20° for flowing watercourses (31F) and from 20° to 30° for fish ladders (1) that are integrated into catchment reservoirs (31T).

26. A process according to claim 24 or 25, **characterized in that** the pipe sections (45T) have a length of at least 70 cm.

27. A process according to one or several of the claims 24 through 26, **characterized in that** a sector piece (42) is cut from the individual pipe sections (45T) to form a basin wall (40) with an opening (4Ö) by means of coaxial cuts (KS) arranged on one side of its plane of symmetry (SE).

28. A process according to one or several of the claims 24 through 27, **characterized in that** the sector piece (42) is cut from the pipe section (45T) in the area in which a plane (WE) bisecting the angle of the opening (4Ö) is perpendicular to the plane of symmetry (SE).

29. A process according to claim 27 or 28, **characterized in that** the sector piece (42) has a center angle (4ZW) between 10 and 180°, preferably between 20 and 60°.

30. A process according to one or several of the claims 24 through 26, **characterized in that** the individual pipe sections (45T) each are divided into two halves (41) of equal size by means of coaxial cuts (KS1) along their planes of symmetry (SE) and that these halves can be integrated into the fish ladder (1) as basin walls (40) to form a semi-cylindrical basin (41).

31. A process according to one or several of the claims 24 through 26, **characterized in that** the sector piece (42) is divided by means of at least one further coaxial cut (KS2) into at least two segments (42T) which can be integrated into the fish ladder (1) between adjacent edges (13a, 13b) of adjacent basin walls (4a, 4c) with the same orientation to form a basin (4).

32. A process according to one or several of the claims 24 through 31, **characterized in that** the pipe (45) has a diameter (d1) of 0,8 to 5 m, preferably 1 to 3 m.

33. A process according to one or more of claims 24 to 32, **characterized in that** the pipes (45) are made of fiber cement or glass-fiber cement or the like.

## Revendications

1. Echelle à poissons pour surmonter une hauteur de retenue, avec un afflux d'eau en amont (2) et un écoulement d'eau en aval (3) et avec, entre ceux-ci, des bassins (4) disposés les uns à la suite des autres, essentiellement dans le sens de la pente (G), lesquels bassins (4) présentent chacun une fente d'amenée (5Z) et une fente d'écoulement (5A) en tant que fentes de circulation verticales (5) et des moyens de déviation (6) pour former un parcours décrivant des méandres,
**caractérisée en ce que**
les bassins (4) possèdent chacun une paroi intérieure partiellement cylindrique (40) et lesdits bassins (4a, 4b, 4c), disposés les uns à la suite des autres, sont orientés les uns vers les autres et décalés latéralement par rapport les uns aux autres de sorte que les fentes de passage (5) se trouvent orientées transversalement par rapport au sens de chute (G) et que lesdites fentes de passage (5) sont limitées chacune, des deux côtés, sur toute la hauteur du bassin, par un premier tube vertical, partiellement cylindrique (60), en tant que premier moyen de déviation (6), dont le rayon est considérablement plus petit que le rayon des parois intérieures (40) du bassin.

2. Echelle à poissons selon la revendication 1,
**caractérisée en ce que**,
sur le premier tube partiellement cylindrique (60), au moins un deuxième tube partiellement cylindrique, vertical, plus court (61, 62) est fixé, lequel présente un diamètre intérieur un peu plus grand que le diamètre extérieur du tube (60, 61) situé directement sous lui, ce dont résulte une modification de la coupe transversale sur la hauteur de la fente de circulation (5).

3. Echelle à poissons selon la revendication 1 ou 2,
**caractérisée en ce que**
la largeur de la fente de circulation (5) est d'au moins 30 mm, préférentiellement d'au moins 45 mm.

4. Echelle à poissons selon l'une ou plusieurs des revendications 1 à 3,
**caractérisée en ce que**
les bassins (4) présentent une surface de base (4G) égale.

5. Echelle à poissons selon l'une ou plusieurs des revendications 1 à 4,
**caractérisée en ce que**
des bassins (4, 4a, 4b, 4c), disposés successivement, présentent, par rapport les uns aux autres, une différence de hauteur (hauteur de chute) de 10 à 25 cm, préférentiellement de 15 cm.

6. Echelle à poissons selon l'une ou plusieurs des revendications 1 à 5,
**caractérisée en ce que**
la plus courte des génératrices situées dans le plan de symétrie (SE) d'un bassin (4) couvre au moins 70 cm.

7. Echelle à poissons selon l'une ou plusieurs des revendications 1 à 6,
**caractérisée en ce que**
les parois (40) d'un bassin individuel (4) sont formées par une pièce tubulaire partiellement cylindrique (41, 41*), en tant que première paroi de bassin (11), et par un élément (42, 42*), située à l'opposé, en tant que deuxième paroi de bassin (12), et que l'élément (42), en tant que pièce de jonction, réunit des bords voisins (13a, 13b) des pièces tubulaires de bassins opposés (4a, 4c), disposées directement au-dessus ou au-dessous, et que ces bords (13a, 13b) sont gainés par le premier moyen de déviation (6).

8. Echelle à poissons selon l'une ou plusieurs des revendications 1 à 7,
**caractérisée en ce que**
la pièce tubulaire (41, 41*) présente, en tant qu'arc de cercle, un angle en centre (4ZW) supérieur à 180°, préférentiellement de 300°, et que, pour former un bassin individuel (4), l'élément (42, 42*) est disposé sur une corde formant l'arc de cercle, de sorte que la superficie du segment de cercle, qui forme une surface de base (4G) du bassin (4), soit plus grande qu'une surface de demi-cercle.

9. Echelle à poissons selon la revendication 8,
**caractérisée en ce que**
les bassins (4), pour la formation d'un gradin dans leurs zone d'écoulement (4AB), présentent une contre-berme (8) avec un fond de bassin (28) horizontal ou légèrement ascendant à l'opposé de la pente (G).

10. Echelle à poissons selon la revendication 8 ou 9,
**caractérisée en ce que**
l'élément (42, 42*) et la pièce tubulaire (41*) y faisant directement suite présentent chacun, sur le bord supérieur (16) d'un angle commun, une découpe en demi-cercle (18), les points centraux des surfaces semi-circulaires étant situés sur un axe (A), et qu'une semi-coque (22) est insérée dans lesdites découpes (18) en tant que canal de trop-plein (22).

11. Echelle à poissons selon la revendication 7,
**caractérisée en ce que**
la pièce tubulaire (41*) présente un angle en centre (4ZW) supérieur à 180°, préférentiellement de 340°, et l'élément (42, 42*) est disposé à l'intérieur de la pièce tubulaire (41*) de sorte à former, à l'intérieur du bassin (4), des bassins partiels (4T) présentant une coupe transversale elliptique et une surface presque égale, et, entre les moyens de déviation (6) et les parois intérieures opposées (11, 12) de bassin, des étranglements (5E) en tant que fentes de circulation (5).

12. Echelle à poissons selon la revendication 11,
**caractérisée en ce que**,
en aval des étranglements (5E), une pièce tubulaire partiellement cylindrique (13) est fixée, en tant que deuxième moyen de déviation (62).

13. Echelle à poissons selon la revendication 7,
**caractérisée en ce que**
la pièce tubulaire (41) a un angle en centre (4ZW) de 180° et la pièce tubulaire (42, 42*) est disposée sur le diamètre du demi-cercle.

14. Echelle à poissons selon l'une ou plusieurs des revendications 1 à 13,
**caractérisée en ce que**
les points centraux des bassins (4a, 4b ; 4c, 4d) orientés dans le même sens forment respectivement une droite imaginaire (G1, G2) s'étendant dans le sens de la pente.

15. Echelle à poissons selon la revendication 14,
**caractérisée en ce que**
les points centraux sont distancés régulièrement les uns des autres.

16. Echelle à poissons selon l'une ou plusieurs des revendications 7 à 15,
**caractérisée en ce que**
la deuxième paroi de bassin (12) est un secteur tubulaire (42) qui présente une longueur d'arc relativement plus courte que la longueur d'arc de la première paroi de bassin (11) et s'étend, incurvée inversement, vers la paroi intérieure opposée (40) pour former un bassin individuel (4).

17. Echelle à poissons selon l'une ou plusieurs des revendications 7 à 15,
**caractérisée en ce que**
la deuxième paroi de bassin (12) est une plaque (42*) qui présente une longueur inférieure au diamètre (d1) du bassin (4).

18. Echelle à poissons selon l'une ou plusieurs des revendications 1 à 17,
**caractérisée en ce que**
les bassins (4) présentent des fonds de bassin (28) de structure rugueuse pour la formation d'un système lacunaire (30), ce en vue de quoi des sédiments (29S) d'une grosseur allant de celle d'un poing à celle d'une tête d'enfant et / ou une natte amorphe, à grosses mailles (29M), avec des cavités reliées entre elles, sont fixés au fond du bassin (4).

19. Echelle à poissons selon l'une ou plusieurs des revendications 1 à 18,
**caractérisée en ce que**
celle-ci est une unité (1) formant un bypass autour d'un barrage transversal (34) qui retient l'eau d'un cours d'eau (31F) et est reliée audit cours d'eau (31F) par l'intermédiaires de fossés de jonction (32, 35), sécurisés latéralement, un fossé de jonction supérieur (32) partant de la zone de retenue (33), en amont du barrage transversal (34), et un fossé de jonction inférieur (35) conduisant au courant inférieur (36), en aval dudit barrage (34).

20. Echelle à poissons selon l'une ou plusieurs des revendications 1 à 18,
**caractérisée en ce que**
celle-ci est une échelle à poissons (1) composée de plusieurs parties qui forme un bypass pour permettre de surmonter un mur de barrage (34M) d'un barrage-réservoir (31T), dans laquelle, du côté retenue du mur de barrage (34M), un secteur supérieur d'échelle (1O) et, du côté espace libre dudit mur de barrage (34M), un secteur inférieur d'échelle 1U), avec un fossé de jonction (35) à destination du courant inférieur (36) sont déterminés et que les deux secteurs (1O, 1U) sont reliés par un canal de liaison (1V) qui traverse le mur de barrage (34M).

21. Echelle à poissons selon la revendication 19 ou 20,
**caractérisée en ce que**
le fossé de jonction (35) conflue avec le courant inférieur (36) en'formant avec la rive associée un angle aigu qui est préférentiellement de 30° environ.

22. Echelle à poissons selon la revendications 19 ou 20,
**caractérisée en ce que**,
dans le courant inférieur, transversalement entre les rives latérales (38), un organe de guidage et de déviation est disposé, dont l'extrémité côté échelle à poissons est située dans la zone de l'embouchure du fossé de jonction inférieur (35).

23. Echelle à poissons selon l'une ou plusieurs des revendications 1 à 22,
**caractérisée en ce que**
celle-ci est composée d'éléments pré-montés (1E) comprenant des pièces tubulaires (41, 41*) orientées dans le même sens et de pièces de jonction (42, 42*) disposées entre celles-ci, lesquelles pièces de jonction (42, 42*) peuvent être ancrées dans le secteur riverain (44), sur une plaque de sol (28P), à l'aide de fondations individuels (43).

24. Procédé pour la fabrication d'un bassin pour une échelle à poissons selon l'une ou plusieurs des revendications 1 à 23,
**caractérisé en ce que**
un tube (45) peut être divisé en plusieurs portions égales (45T) par des coupes transversales (QR), orientées alternativement à angle droit par rapport à l'axe (45A) dudit tube, et des coupes transversales (QS) orientées par rapport à l'axe (45A) dudit tube sous un angle de coupe (W) prédéterminé par une pente (G) de l'échelle à poissons, au moins une paroi de bassin partiellement cylindrique, au moins, étant ensuite réalisée avec lesdites portions de tube (45T), à l'aide de coupes coaxiales (KS), orientées parallèlement à l'axe du tube (45A).

25. Procédé selon la revendication 24,
**caractérisé en ce que**
l'angle de coupe α est de 10° à 40°, préférentiellement de 15° à 20° pour les échelles à poissons (1) intégrées dans des eaux courantes (31F) et de 20° à 30° pour celles intégrées dans des barrages-réservoirs.

26. Procédé selon la revendication 24 ou 25,
**caractérisé en ce que**
les portions de tube (45T) présentent une longueur d'au moins 70 cm.

27. Procédé selon l'une ou plusieurs des revendications 24 à 26,
**caractérisé en ce que**,
dans les différentes portions de tube (45T), pour la réalisation d'une paroi de bassin (40) présentant une ouverture (4Ö), un secteur (42) est découpés à l'aide de coupes coaxiales (KS) disposées monolatéralement par rapport à leur plan de symétrie (SE).

28. Procédé selon l'une ou plusieurs des revendications 24 à 27,
**caractérisé en ce que**
le secteur (42) est découpé dans la portion de tube (45T), dans la zone où un plan bissecteur (WE) de l'ouverture (4Ö) est à angle droit par rapport au plan de symétrie (SE).

29. Procédé selon la revendication 27 ou 28,
**caractérisé en ce que**
le secteur (42) présente un angle en centre (4ZW) de 10° et 180°, préférentiellement de 20° à 60°.

30. Procédé selon l'une ou plusieurs des revendications 24 à 26,
**caractérisé en ce que**
les différentes portions de tube (45T) sont divisées chacune en deux moitiés égales, par des coupes coaxiales (KS1), situées dans leur plan de symétrie (SE), lesquelles moitiés peuvent être intégrées dans l'échelle à poissons, en tant que parois de bassin (40), pour former un bassin semi-cylindrique (41).

31. Prccédé selon l'une ou plusieurs des revendications 24 à 26,
**caractérisé en ce que**
le secteur (42) est divisé, par au moins une autre coupe coaxiale (KS2), en au moins deux parties (42T) qui, pour former un bassin (4) entre des bords voisins (13a, 13b) de parois de bassin (4a, 4c) disposées l'une à côté de l'autre, orientées dans le même sens, peuvent être intégrées dans l'échelle à poissons.

32. Procédé selon l'une ou plusieurs des revendications 24 à 31,
**caractérisé en ce que**
le tube (45) a un diamètre (dl) de 0,8 à 5 m, préférentiellement de 1 à 3 m.

33. Procédé selon l'une ou plusieurs des revendications 24 à 32,
**caractérisé en ce que**
les tubes (45) sont réalisés en fibrociment, en ciment armé de fibres de verre ou en autres matières analogues.
